(19) Europäisches Patentamt
European Patent Office
Office européen des brevets

(11) EP 4 361 198 A1

(12) **EUROPEAN PATENT APPLICATION**

(43) Date of publication:
**01.05.2024 Bulletin 2024/18**

(21) Application number: **22203748.3**

(22) Date of filing: **26.10.2022**

(51) International Patent Classification (IPC):
***C08G 65/22*** *(2006.01)* ***A61K 47/60*** *(2017.01)*
***C08G 65/333*** *(2006.01)*

(52) Cooperative Patent Classification (CPC):
**C08G 65/22; A61K 47/60; C08G 65/33331; C08G 65/33396**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **Johannes Gutenberg-Universität Mainz**
**55122 Mainz (DE)**

(72) Inventors:
- **Frey, Holger**
**55128 Mainz (DE)**
- **Matthes, Rebecca**
**55128 Mainz (DE)**
- **Dreier, Philip**
**55128 Mainz (DE)**
- **Müller, Verena**
**55128 Mainz (DE)**
- **Schmidt, Julian**
**55128 Mainz (DE)**

(74) Representative: **Durm Patentanwälte PartG mbB**
**Patentanwälte**
**Moltkestrasse 45**
**76133 Karlsruhe (DE)**

(54) **POLY(ETHYLENE GLYCOL) HAVING C2-ALKYLOXYMETHYL SIDE CHAINS, C3-ALKYLOXYMETHYL SIDE CHAINS OR BOTH, BIOCONJUGATES THEREOF, PROCESS FOR ITS PREPARATION AND ITS USE**

(57) The present invention concerns polyether polymers represented by the following formula [I]:

$$-(CH_2CHR\text{-}O\text{-})_m- \qquad [I]$$

wherein the residues R are independently from each other selected from the group consisting of hydrogen, ethoxymethyl, n-propoxymethyl and iso-propoxymethyl; and m is in the range of from 10 to 1000 and the dispersity is 1.15 or less. The polyether polymers are statistical copolymers.

The invention further concerns a process for their preparation, conjugates thereof and the use thereof.

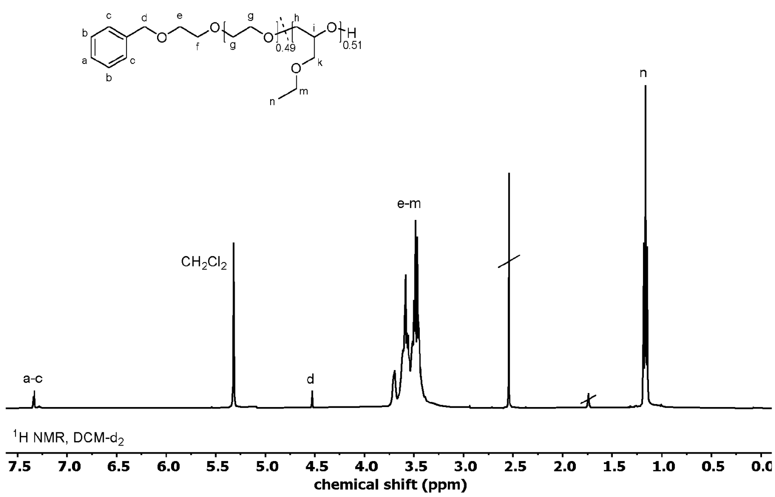


Figure 1

EP 4 361 198 A1

## Description

### Introduction

The present invention concerns polyether polymers represented by the following formula [I]:

$$-(CH_2CHR\text{-}O\text{-})_m- \qquad [I]$$

wherein the residues R are independently from each other selected from the group consisting of hydrogen, ethoxymethyl, n-propoxymethyl and iso-propoxymethyl; and m is in the range of from 10 to 1000 and the dispersity is 1.15 or less. The polyether polymers are statistical copolymers. The invention further concerns a process for their preparation, conjugates thereof and the use thereof.

### Background of the invention

The aliphatic polyether poly(ethylene glycol) (PEG) is the most widely employed polymer in pharmaceutics, medicine and drug delivery. PEGylation, i.e. the attachment of PEG to peptide drugs, was introduced in the 1970ies and has since then led to numerous highly efficient drugs. PEGylation is a form of conjugation, i.e. the attachment of a polymer to a molecule by a covalent bond. The main effect of the attachment of PEG chains is the so-called "stealth effect", which prevents close approach of molecules belonging to the immune system, recognition by the immune system and subsequent binding and removal of the PEGylated molecules by the reticuloendothelial system (RES) in the liver. More simply, PEG attachment also prevents opsonization by proteins, when attached to the surfaces of nanocarriers for drug delivery. The inhibition of protein adsorption by PEG is further emphasized by fulfillment of the rules for protein-repellent surfaces derived by Whitesides (Yarovsky et al., "Quantitative design rules for protein-resistant surface coatings using machine learning", Scientific Rep. 2019, 9, 265). PEGylation is also used for "stealth liposomes" with long circulation times, low molecular weight drugs as well as for lipid nanoparticles. Such structures are employed for the transport and delivery of mRNA. Here the respective PEG-based lipids play a key role for the vaccination against the COVID-19 pandemic, enabling transport of mRNA to cells, avoiding undesired degradation processes. The recently approved mRNA vaccines from Moderna and Pfizer/BioNTech require PEGylated lipids to ensure the stability of the lipid-based nanoparticles (LNPs) and to provide a stealth effect to the LNPs. PEGylation also prevents coalescence of liposomes and similar structures in aqueous systems. Commonly, molecular weights in the range of 2 to 40 kg/mol are preferred for the PEGylation of drugs or nanocarriers. To sum up, PEG has become a standard for water-soluble medical polymers for a vast variety of medical and pharmaceutical uses, particularly in the therapy of cancer, chronic diseases and recently also for RNA delivery. The success of PEG has several reasons. Among them are commercial availability in sufficient quality and in a wide range of highly controlled molar masses from the living anionic ring-opening polymerization (AROP) of ethylene oxide as well as PEG's extremely low toxicity and high biocompatibility. Further, PEG can be prepared with narrow molecular weight distributions.

However, an increasing number of studies summarize concerns related to the presence of so-called anti-PEG antibodies (APAs) in a large and constantly growing part of the population. Such antibodies can lead to accelerated clearance of PEGylated drugs from the blood stream (ABC), i.e. loss of the stealth effect that is crucial for therapeutic success. Further, allergic reactions and in extreme and rare cases even potentially fatal anaphylactic shock have been observed. These undesired effects are observed both for PEGylated peptide drugs, PEGylated liposomes and other PEGylated nanocarriers as well as PEGylated small molecule drugs. Anti-PEG antibodies are also problematic with respect to PEGylated lipids for RNA-transporting lipid nanoparticles, e.g., in the context of COVID-19 vaccines. APAs are often mentioned in the context of potential PEG-alternatives as a motivation for PEG-alternatives. As an estimate, approximately 10% of the population experience allergic reactions when treated with PEGylated formulations. Only recently, the nature of the binding between PEG and anti-PEG antibodies has been studied by Lai et al (Lai et al, "Structure of an anti-PEG antibody reveals an open ring that captures highly flexible PEG polymers." Commun Chem 2020, 3, 124). They concluded that binding of PEG is due to an open ring structure of PEG captured by the APAs. By counting the number of monomer repeats of the PEG polymer interacting with the interior and exterior paratope of the Fab, they found the size of the PEG antigen epitope to be ~700 g/mol, equivalent to 16 monomer subunits. Thus, at least 16 ethylene glycol units are required for binding by the APA. Other works suggest that also shorter regular chain segments of PEG as well as the methoxy end group of mPEG ($\alpha$-methoxy poly(ethylene glycol)) structure play a key role for the recognition. US 8,129,330 B2 therefore discloses methods for the preparation of PEG conjugates that are based on end group modification of PEG chains. Variation of the end group of PEG is disclosed, aiming at minimizing interaction of for example methoxy end groups with anti-PEG antibodies. The authors disclose conjugates, wherein a hydroxyl group is present on all of the distal polyalkylene glycol termini in said conjugate, and wherein said conjugate exhibits reduced antigenicity compared to mPEG-protein conjugates. It has been reported that antibodies elicited by

PEG-OH have similar affinity to both mPEG and PEG-OH, while antibodies induced by mPEG recognize mPEG more effectively than PEG-OH (Sherman et al. "Role of the methoxy group in immune responses to mPEG-protein conjugates." Bioconjug Chem 2012, 23(3), 485-499; Sherman et al, "Selectivity of binding of PEGs and PEG-like oligomers to anti-PEG antibodies induced by methoxyPEG-proteins." Mol Immunol 2014, 57(2), 236-246.). These results have been obtained by using competitive ELISA and imply that APAs elicited by PEG-OH-proteins are directed against the backbone of PEG (backbone-specific), while antibodies induced by mPEG-protein conjugates are methoxy group specific. It can be concluded that regular segments of at least 4-5 to 16 regularly arranged ethylene glycol units are required to achieve recognition and immunogenic reaction by anti-PEG antibodies. Recent clinical works demonstrated that the presence of antibodies against PEG permits to predict Pegasparagase allergic reactions and failure of rechallenge, emphasizing the clinical importance of anti-PEG antibodies for the success of the treatment of leukemia in this case (Liu et al, "Antibodies Predict Pegasparagase Allergic Reactions and Failure of Rechallenge", J. Clin. Oncol. 2019, 37, 2051).

Three main strategies for the modification of the PEG structure have been developed to counteract undesired APA interaction of PEGylated therapeutics. Replacing the methoxy end group of mPEG by a hydroxyl group led to a strong decrease in the affinity for APAs, which was demonstrated by competitive ELISA tests. However, it is obvious that for large scale commercial applications the presence of a hydroxyl group at the terminus would require protected functional initiators, which complicates existing synthetic protocols. A second recent strategy is disclosed in US 2019/0015520 A1 and relies on PEG-bottlebrush structures, i.e. small PEG structures appended to a poly(hydroxyethyl methacrylate) backbone. The inventors state that this type of PEG-architecture minimizes anti-PEG antigenicity, while preserving the desired stealth properties for surface coating. However, the resulting PEG-grafted copolymers exhibit rather broad, multimodal molecular weight distributions, which represent a major obstacle for approval for medical application and PEGylation analogous bioconjugation with peptides or lipids. Narrow distributions ($M_w/M_n < 1.15$) were exclusively feasible by performing a cost- and time-consuming preparative size-exclusion chromatography (SEC).

Another strategy is to exchange PEG with the linear polyether polyglycerol to increase the blood circulation time of liposomes and to avoid accelerated blood clearance (see Abu Lila et al, "Use of polyglycerol (PG), instead of polyethylene glycol (PEG), prevents induction of the accelerated blood clearance phenomenon against long-circulating liposomes upon repeated administration", International Journal of Pharmaceutics, 456 (2013) 235-242). However, the utilization of polyglycerol also results in the introduction of multiple hydroxyl functionalities to the liposome, which is in contrast to the aforementioned rules of Whitesides resulting in complex unspecific recognitions of peptides in the blood stream. Therefore, a targeted use of the conjugated drug or liposomes is not possible with polyglycerol.

Since PEGylated therapeutics are often used for chronic or in many cases otherwise fatal diseases, like in cancer therapy, in many cases repeated doses have to be administered over prolonged periods of time.

Homopolymers and blockcopolymes of ethylene oxide, ethyl glycidyl ethers, n-propyl glycidyl ethers and iso-propyl glycidyl ethers have been described, but their use in conjugates or in biological or pharmaceutical systems is not known. Such polymers are for examples described in C. R. Fellin et al; "tunable temperature- and shear-responsiove hydrogels based on poly(alkyl glycidyl ether)s; Polym Int 2019, 68: 1238-1246 and in H. Jung; Regulating Dynamics of Polyether-Based Triblock Copolymer Hydrogels by End-Block Hydrophobicity"; Macromolecules 2020, 53, 10339-10348.

The formation and retention of well-defined polymer end-groups (end-group fidelity) is a critical tool for chain extension and all post polymerization reactions. End-group fidelity is also a decisive factor for the use of polymers in bioconjugates for pharmaceutical applications, in which the biomolecules are connected by means of the end-groups. Polymers with low end-group fidelity comprise a large amount of macromolecules that cannot be conjugated with a biomolecule and cannot be removed from the mixture without undue expenditure. The formed conjugates do not have the required purity. The loss of end-groups is therefore not desirable but cannot be completely avoided. End-group fidelity varies greatly depending on the reaction conditions in the preparation of the polymers.

Purpose of the invention

It is the objective of the present invention to provide alternative polymers that are able to replace PEG in its applications and that can alleviate at least some of the aforementioned disadvantages of PEG. The polymers should preferably be suited to replace PEG in pharmaceutical and medical applications, especially in bioconjugates, PEG lipids, materials for controlled release, etc. It is further an objective to provide polymers with low dispersity, based on the anionic ring-opening polymerization. It is crucial to provide polyethers of medical grade quality, which translates to dispersities below 1.15 (preferentially below 1.10), and precisely controlled molecular weight as well as high purity and absence of potentially toxic impurities. It is also desired to provide a process that allows preparation of such polymers in a simple and commercially feasible way. The polymers should have a low affinity towards anti-PEG antibodies (APAs) resulting in a low immunogenicity.

Detailed description

The present invention concerns poly(ethylene glycol) having C2-alkyloxymethyl side chains, C3-alkyloxymethyl side chains or both. The present invention concerns polyether polymers represented by the following formula [I]:

$$-(CH_2CHR\text{-}O\text{-})_m\text{-} \qquad [I]$$

wherein the residues R are independently from each other selected from the group consisting of hydrogen, ethoxymethyl, n-propoxymethyl and iso-propoxymethyl, with the proviso that the polyether polymers comprise at least two different residues R; and m is in the range of from 10 to 1000, characterized in that the polyether polymers are statistical copolymers and in that the dispersity is 1.15 or less measured by size exclusion chromatography in DMF by calibration with PEG standards. Preferably at least one of the residues R is hydrogen. These new polyether polymers are a new type of material, which behaves very different to PEG in regard to the affinity towards anti-PEG antibodies (APAs) and have a low immunogenicity. But the polyether polymers of the present invention behave very similar to PEG with respect to various features that are important for pharmaceutical applications, including solubility under physiological conditions, hydration, cell viability and biocompatibility.

Key to the reduced interaction with APAs is the use of randomly distributed substituents at the PEG backbone. The increased spatial requirements of the said PEG copolymers impede or disable interaction with anti-PEG antibodies according to the specific "lock and key principle" and thus disable recognition. Besides the steric impact, the random or statistical distribution of the substituents along the polymer backbone and/or the random or statistical steric orientation of the substituents furthermore disable the development and formation of specific anti-polymer antibodies for the inventive polymers.

Key to the similarity of the features of PEG and the inventive polymers is the use of alkoxymethyl side chains. This maintains solubility under physiological conditions and other properties in view of PEG. A repeating group of the present polymer wherein R is an ethoxymethyl group, i.e. $(-CH_2\text{-}CH(-CH_2\text{-}OCH_2CH_3)\text{-}O)\text{-}$, differs from the molecular formula $C_4H_8O_2$, i.e. two repeating units of PEG $(-CH_2\text{-}CH_2\text{-}O)_2\text{-}$ only in one methylene group. It comprises a similar number of atoms and very similar functional groups. This leads to similar properties, including similar solubility under physiological conditions, which is important for applications in biological systems. The lack of reactive functional groups in the side chain like hydroxy, amino etc. reduces undesired interactions with biological systems. The same applies *mutatis mutandis* to n-propoxymethyl groups and iso-propoxymethyl groups.

The number of the ethoxymethyl, n-propoxymethyl and iso-propoxymethyl may be used to adjust the properties of the polymers, for example their solubility, interaction with lipids, properties in respect to the passage of biological membranes etc. In a preferred embodiment of the present invention 1 to 95% of residues R of the polymer are selected from the group consisting of ethoxymethyl, n-propoxymethyl and iso-propoxymethyl. In a more preferred embodiment 1 to 85% of the residues R are selected from the group consisting of ethoxymethyl, n-propoxymethyl and iso-propoxymethyl and in an even more preferred embodiment 3 to 85% of the residues R are selected from this group. Obviously, ethylene oxide repeating units in the inventive polymers also lead to similar properties with PEG. Polymers in which a high number of the group R are hydrogen therefore provides the polymers that are closest in behavior to PEG and are for this reason preferred.

Higher homologues of alkoxymethyl, i.e. where R is C4 alkoxymethyl and higher increasingly differ from the properties of PEG and exhibit detrimental properties and should therefore generally be avoided. They may however be used in small quantities when required, preferably in amounts of 5 % or less and more preferably in amounts of 3 % or less and most preferred 1 % or less, based on the sum of all residues R selected from the group consisting of hydrogen, ethoxymethyl, n-propoxymethyl and iso-propoxymethyl; i.e. on m. Various other comonomers may be also used in small amounts, i.e. preferably less than 3 wt%, more preferably less than 1 wt% and most preferred in less than 0.1 wt% based on the weight average molecular weight of the polymer of formula [I], if necessary. They may for example be used to introduce functional groups or side chains into the polymer. Best suited for the use in pharmaceutical application are however usually polymers of the present invention that comprise only the repeating units of formula (I). Preferably the polyether polymers of the present invention comprise at least 90% of the monomers of formula [I], more preferably at least 95%, even more preferred at least 98% and most preferred at least 99%.

Preferred 5 to 99% of the residues R are hydrogen and 1 to 95% of the residues R are independently from each other selected from the group consisting of ethoxymethyl, n-propoxymethyl and iso-propoxymethyl. Even more preferred are 15 to 97% of the residues R are hydrogen and 3 to 85% of the residues R are independently from each other selected from the group consisting of ethoxymethyl, n-propoxymethyl and iso-propoxymethyl. The lowest immunogenicity provide polymers of the present invention, where about 50% of all ethylene oxide repeating units are substituted by alkyl glycidyl ethers. For this reason polymers are preferred where 30 to 85% of the residues R are hydrogen and 15 to 70% of the residues R are independently from each other selected from the group consisting of ethoxymethyl, n-propoxymethyl and iso-propoxymethyl and more preferred where 45 to 85% of the residues R are hydrogen and 15 to

55% of the residues R are independently from each other selected from the group consisting of ethoxymethyl, n-propoxymethyl and iso-propoxymethyl.

In a preferred embodiment of the present invention the residue R are selected independently from each other from the group consisting of hydrogen and ethoxymethyl. All amounts for the residue R disclosed herein apply to this embodiment *mutatis mutandis.* In a further preferred embodiment of the present invention the residues R are independently from each other selected from the group consisting of hydrogen, n-propoxymethyl and iso-propoxymethyl. All amounts for the residues R disclosed herein apply to this embodiment *mutatis mutandis.* In a more preferred embodiment the residues R are independently from each other selected from the group consisting of hydrogen and n-propoxymethyl and iso-propoxymethyl and the amount of the residues R selected independently from each other from the group consisting of n-propoxymethyl and iso-propoxymethyl is in the range of 1 to 80%, more preferred in the range of 1 to 70%, even more preferred in the range of 5 to 50% and most preferred in the range of from 5 to 30%. It is further preferred that the amount of the residues R selected from the group consisting of n-propoxymethyl and iso-propoxymethyl is half or less than half of the amount of the residues R that is ethoxymethyl. This is especially true for embodiments in which the amount of the residues R which are selected from the group consisting of ethoxymethyl, n-propoxymethyl and iso-propoxymethyl are 50% or more of the groups R.

The polyether polymer according to the present invention may be a poly(ethyl glycidyl ether-co-ethylene oxide) copolymer, poly(n-propyl glycidyl ether-co-ethylene oxide) copolymer or a poly(iso-propyl glycidyl ether-co-ethylene oxide) copolymer. Especially useful in pharmaceutical applications is a polyether polymer of the present invention, wherein the polyether is a poly(glycidyl ethyl ether-co-ethylene oxide) copolymer, i.e. wherein the residue R is selected from the group consisting of hydrogen and ethoxymethyl. The amounts of the group R for these embodiments are as described herein for the polymers of formulae [I], [Ia] to [Ic], [II] and [IIa] to [IIc].

Especially preferred are polyether polymer of the present invention, wherein at least 15% and preferably at least 20% of R are independently of each other selected from the group consisting of ethoxymethyl, n-propoxymethyl and iso-propoxymethyl. Even more preferred are polyether polymers, wherein 30 to 85% of the residues R are hydrogen and the remaining residues R are independently from each other selected from the group consisting of ethoxymethyl, n-propoxymethyl and iso-propoxymethyl. Most preferred are polyether polymers of the present invention, wherein 30 to 85% of the residues R are hydrogen and the remaining residues R are ethoxymethyl. These copolymers comprising repeating units where R is hydrogen combine most of the aforementioned advantageous properties. They have low immunogenicity, good water solubility and/or low/no crystallinity and are otherwise very similar to PEG.

m is in the range of 10 to 1000; m is preferably in the range of 20 to 900 and more preferably in the range of 30 to 800. Most preferably m is in the range of 30 to 700. These ranges correspond to the polymer weights of PEG that are most suited for medical applications and that are used in existing medical application for PEG. Furthermore, the polymers of the present invention have preferably a molecular weight $M_n$ as determined by $^1$H NMR spectroscopy in the range of 500 to 50.000 g/mol, more preferably in the range of 1.000 to 50.000 g/mol and most preferably in the range of 1.000 to 30.000 g/mol. These ranges apply to all embodiments of the present invention.

Copolymers of the present invention are statistical copolymers. Such copolymers provide the lowest immunogenicity, as they do not provide a blueprint for the immune system for antibodies. They are intrinsically resistant to an immune response and are therefore preferred embodiments of the present invention. These polymers may be prepared by a process of the present invention as discussed below.

As described above, similarity to PEG is an important feature of the polymers of the present invention. This is especially true for the end groups of the polymer. Processing of PEG for the use in the pharmaceutical field, involves regularly the modification of the end groups. For this purpose, any end group known to be used for PEG can also be used for the present polymers. This includes not only the use of all known end groups for PEG, but also their modification including the kind of modification and the process of modification. If necessary, in order to allow the present polymers to function in this regard as similar or in fact identical to PEG, the present polymers may be provided with ethylene oxide repeating units on either end or both ends of the polymer, as depicted in Formula [Ia] to [Ic]. These are preferred embodiments of the present invention.

$$-(CH_2CH_2\text{-}O\text{-})_a\text{-}(CH_2CHR\text{-}O\text{-})_m\text{-} \qquad [Ia]$$

$$-(CH_2CHR\text{-}O\text{-})_m\text{-}(CH_2CH_2\text{-}O\text{-})_a\text{-} \qquad [Ib]$$

$$-(CH_2CH_2\text{-}O\text{-})_a\text{-}(CH_2CHR\text{-}O\text{-})_m\text{-}(CH_2CH_2\text{-}O\text{-})_a\text{-} \qquad [Ic]$$

In these formulae the partial formulae $-(CH_2CHR\text{-}O\text{-})_m\text{-}$ depicts a polymer of the present invention as described herein, where m and R are defined as in formula [I] and the index a may be any positive integer, but is preferable a number in the range of 1 to 10 and more preferably in the range of 1 to 3. Polymers according to formulae [Ia] to [Ic] allow the modification of the termini of the present polymers exactly as PEG is modified in known processes and especially

in present industrial processes. This allows for a smooth transition of established processes from PEG to the polymers of the present invention. Such can be prepared without much additional effort, as will be discussed below.

A further embodiment of the present invention, are polyether polymers represented by any of the following formula [II] and [IIa] to [IIc]:

$$X\text{-}(CH_2CHR\text{-}O\text{-})_m\text{-}CH_2CHR\text{-}Y \qquad [II]$$

$$X\text{-}(CH_2CH_2\text{-}O\text{-})_a\text{-}(CH_2CHR\text{-}O\text{-})_m\text{-}CH_2CHR\text{-}Y \qquad [IIa]$$

$$X\text{-}(CH_2CHR\text{-}O\text{-})_m\text{-}(CH_2CH_2\text{-}O\text{-})_a\text{-}CH_2CH_2\text{-}Y \qquad [IIb]$$

$$X\text{-}(CH_2CH_2\text{-}O\text{-})_a\text{-}(CH_2CHR\text{-}O\text{-})_m\text{-}(CH_2CH_2\text{-}O\text{-})_a\text{-}CH_2CH_2\text{-}Y \qquad [IIc]$$

wherein m is 19 to 999 and R is defined as in formula [I] and a is as defined in any of formulae [Ia] to [Ic]. X is the end group derived from the initiator of the reaction and the $\alpha$-end group (alpha end group) and Y is the $\omega$-end group (omega-end group).

X or Y or both may be chosen from any end group known for use in PEG. The same end groups may also be provided for the polymers of formulae [Ia] to [Ic].

X and Y may independently of each other or both comprise one or more functional group selected from the group consisting of $-CH(OR)_2$ with R = alkyl, aldehyde (formyl), amide (carboxamido), azide, carbonate (alkoxycarbonyl)oxy), carboxyl (carboxy), carboxylic anhydride, ester (alkoxycarbonyl), ether, halo, haloformyl (carbonohaloridoyl), hemiacetal (alkoxyol), hemiketal (alkoxyol), hydroxy, imide (imido), imine (imino), ketal (dialkoxy), ketone (oyl), orthoester (trialkoxy), primary, secondary, tertiary amino group, primary, secondary and tertiary alkoxy group, sulfhydryl (sulfanyl, H-S-), thioether and combinations thereof. In a preferred embodiment X or Y may be selected from the group consisting of alkyl, hydrogen, hydroxy, alkoxy, sulfanyl, phthalimide, amide, amine and combinations thereof. Maleimide (Mal) and MalFu groups are especially preferred. X or Y or both may be a primary alkoxy group selected of the formulae $R\text{-}CH_n\text{-}O\text{-}$, wherein R is linear, branched or cyclic alkyl or phenyl and n equals 1 to 20. Preferred are X or Y or both selected from the group consisting of methoxy, ethoxy, propoxy, butoxy, pentoxy, hexoxy, heptoxy, octoxy, nonoxy, decanoxy, 3-ethylbutoxy, 2,3-dialkoxypropoxy and a combination thereof. X or Y or both may also be the alkoxy residue of an alcohol of the following formula:

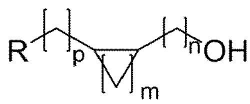

n = 1-20
m = 1-20
p = 0-20 ,

wherein R is hydrogen or linear, branched or cyclic alkyl or phenyl. X or Y or both may be the alkoxy residue of a secondary alcohol selected from any of the formulae

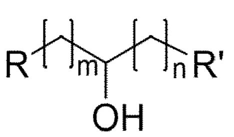

n = 1-20
m = 1-20

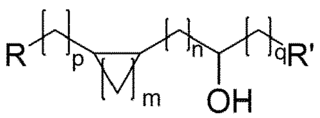

n = 1-20
m = 1-20
p = 0-20
q = 1-20

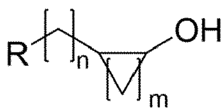

n = 0-20
m = 1-20 ,

wherein R and R' are independently from each other hydrogen or linear, branched or cyclic alkyl or phenyl. Among them a secondary alkoxy group is preferred that is selected from the group consisting of 2-propoxy, 2-butoxy, 2-pentoxy, 3-pentoxy, 2-hexoxy, 3-hexoxy, 2-heptoxy, 3-heptoxy, 4-heptoxy and cyclohexyloxy.

X or Y or both may also be selected from primary alkenyloxy groups, which may be linear, branched or cyclic.

X or Y or both may also be the alkoxy residue of an alcohol of the following formula:

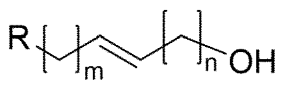

n = 1-20
m = 0-20

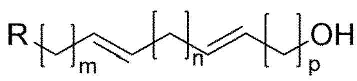

n = 0-20
m = 0-20
p = 1-20

,

wherein R is hydrogen or linear, branched or cyclic alkyl or phenyl. Among them a primary alkenyloxy group is preferred that is selected from the group consisting of 2-propenoxy (allyloxy), 3-butenoxy, 2-butenoxy, 3-methyl-2-butenoxy, 4-pentenoxy, 3-pentenoxy, 2-pentenoxy and 3,5-hexadienoxy.

X or Y or both may further be selected from secondary alkenyloxy groups, which may be branched or cyclic. X or Y or both may be the alkoxy residue of any of the following formulae:

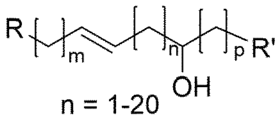

n = 1-20
m = 0-20
p = 1-20

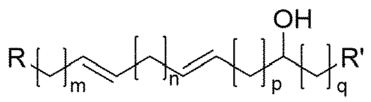

n = 0-20
m = 0-20
p = 1-20
q =1-20

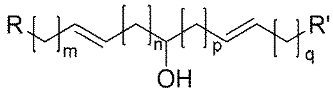

n = 1-20
m = 0-20
p = 1-20
q = 0-20

,

wherein R and R' are independently from each other hydrogen or linear, branched or cyclic alkyl or phenyl. The secondary alkenyloxy group may be of any of the formulae 4-penten-2-oxy, 3-penten-2-oxy, 5-hexen-2-oxy, 4-hexen-2-oxy, 3-hexen-2-oxy, 4,6-heptadien-2-oxy, 1,4-pentadien-3-oxy.

X or Y or both may further be selected from aryloxy and heteroaryloxy groups. Benzyloxy groups are especially preferred. X or Y or both may be the aryloxy or benzyloxy residue of an alcohol of any of the following formulae:

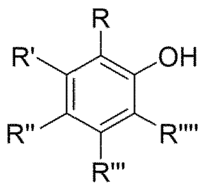

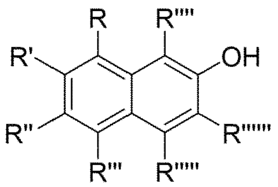

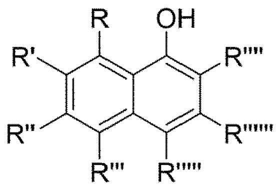

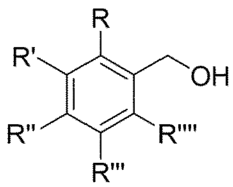

wherein R, R", R''', R'''' R''''' and R'''''' are independently from each other hydrogen or linear, branched or cyclic alkyl or phenyl. X or Y or both are preferably selected from the group consisting of benzyloxy, phenyloxy and naphthyloxy.

X or Y or both may be multifunctional alkoxy groups, i.e. may have multiple ether bonds to the $\alpha$- or $\omega$-position of a plurality of macromolecules of the polymers of the present invention according to formulae [II] or [IIa] to [IIc]. Any suitable polyol may be selected therefore. X or Y or both may especially be selected from the group consisting of polyethers of carbohydrates, especially of Ribose, polyethers of 1,1,1-trimethylolpropane, polyethers of glycerol, polyethers of saccharides or hydrogenated saccharides.

Further, Y may be selected from the group consisting of acrylamide, acrylates, aldehyde, alkyne, amine, aminooxy, azide, benzotriazole carbonate, carboxylic acid, chloroformate, cyanuric chloride, dithioester, epoxide, fluorescein, hydrazide, imidazoyl formate, iminoester, isocyanate, maleimide, MalFu, mesylate, methacrylate, NHS ester, nitrobenzoate, nitrophenylcarbonate, succinimidyl active ester, succinimidyl carbonate, N-succinimidyl carbonate, succinimidyl succinate, thiocarbonate, thiol, thiol carboxylic acid, tosylate, triflate, vinyl sulfone and xanthate.

It is especially preferred that X is selected from the group consisting of hydrogen, alkyl, hydroxy, sulfanyl, C1-C10-alkoxy, C1-C10-thioalkoxy, amino, amino-C1-C10-alkoxy, dibenzylamino-C1-C10-alkoxy, amide, N-heterocyclic carbenes and N-heterocyclic olefins. It is also especially preferred that Y is selected from the group consisting of hydrogen, hydroxy, alkoxy, $-CH_2-C(=O)-R$ wherein R is as defined above, -CHO, alkylcarbonyloxy, alkyoxycarbonyloxy, amine, alkylamine, carboxamido, azide, halogen, sulfanyl, thioalkoxy and sulfonate. In addition, for any alkoxy rest defined herein for the residue X the corresponding thioalkoxy residue may be used, i.e. where a sulfur atom is present instead of the oxygen atom.

Most preferred are polymers of the present invention, where X and/or Y are selected from the group consisting

of low molecular weight drugs, nanocarriers, liposomal structures, peptides, polypeptides, glycoproteins, polynucleotide, polysaccharides, lipid structures, liposomes, aliphatic polyester, especially poly-(lactic acid), surfaces and interfaces, which are bonded directly by a covalent bond or by a spacer to the polymer. Among the aliphatic polyesters, polyesters selected from the group consisting of poly-(lactic acid) (PLA), poly-(L-lactic acid) (PLLA), poly-(D-lactic acid) (PDLA) and poly(glycolide-co-lactide) (PGLA) are preferred. Nanocarriers usable in the present invention are for example selected from the group consisting of carbon nanotubes (CNT), dendrimers, gold nanorods, lipid nanoparticles, liposomes, micelles, nanocrystals, niosomes, polymeric nanoparticles (PNP), solid lipid nanoparticles (SLNs) and virus-based nanoparticles (VNP).

The polymers of the present invention have dispersities of 1.15 or less. The dispersities of the present invention were determined using size exclusion chromatography (SEC) in DMF by calibration with PEG standards as described in more detail in the examples. They are suitable for applications where low dispersities are required, as for example in pharmaceutical, medical and biological applications. Dispersity of polymers in pharmaceutical, medical and biological applications is of great importance, as macromolecules of different molecular weight may behave differently in biological systems. They may for example differ in solubility in water, membrane permeability, crystallinity and renal clearance. Since a uniform behavior of all molecules is desired in medical applications, a low dispersity is often required. Most preferred are therefore polymers of the present invention that have a dispersity of 1.10 or less. This applies to all embodiments of the present invention. A dispersity of 1.10 or less is required for most medical and pharmaceutical applications. Most preferred are polymers of the present invention which have a dispersity that is equal to or lower than 1.08.

Preferred embodiments of the present invention are polyether polymers represented by the following formula [II]:

$$X\text{-}(CH_2CHR\text{-}O\text{-})_mCH_2CHR\text{-}Y \qquad [II]$$

wherein residues R are independently from each other selected from the group consisting of hydrogen, ethoxymethyl, n-propoxymethyl and iso-propoxymethyl; 1 to 100% of the residues R are independently from each other selected from the group consisting of ethoxymethyl, n-propoxymethyl and iso-propoxymethyl; X is selected from the group consisting of hydrogen, alkyl, hydroxy, sulfanyl, C1-C10-alkoxy, C1-C10-thioalkoxy, amino, amino-C1-C10-alkoxy, dibenzylamino-C1-C10-alkoxy, amide, N-heterocyclic carbenes and N-heterocyclic olefins; Y is selected from the group consisting of hydrogen, hydroxy, alkoxy, $-CH_2-C(=O)-R$ wherein R is as defined above, -CHO, alkylcarbonyloxy, alkyoxycarbonyloxy, amine, alkylamine, carboxamido, azide, halogen, sulfanyl, thioalkoxy, N-succinimidyl carbonate and sulfonate. Especially preferred is N-succinimidyl carbonate. X and/or Y may also be selected from the group consisting of low molecular weight drugs, nanocarriers, liposomal structures, peptides, polypeptides, glycoproteins, polynucleotides, polysaccharides, lipid structures, liposomes, surfaces and interfaces, which are bonded directly by a covalent bond or by a spacer to the polymer, m is in the range of from 19 to 999, characterized in that the dispersity is 1.15 or less. For the amounts of the residues R all disclosures herein for the inventive polymers according to formula [I] apply *mutatis mutandis* to this embodiment.

An especially preferred embodiment of the present invention is a polyether polymer of the present invention, wherein X is alkoxy and Y is hydroxy. Further preferably X is a C1-C10-alkoxy group and Y is hydroxy and even more preferably X is a C1-C3 linear alkoxy group and Y is hydroxy. These embodiments are analogous to commercially available PEG derivates. Most preferred X is methoxy and Y is OH, which is analogous to mPEG.

As discussed in regard to the dispersity, a unified behavior of all molecules in drugs and excipients used in pharmaceutical and medical applications is preferred. The end-group fidelity of the polymers of the present invention may be determined by MALDI TOF MS or by a combination of MALDI TOF MS with $^1H$ NMR spectroscopy by known methods. The polymers of the present invention have preferably an end-group fidelity of at least 95 % in regard to the group X and more preferably of at least 98 %. In a further embodiment the polymers of the present invention have preferably an end-group fidelity of at least 95 % in regard to the group Y and more preferably of at least 98 %. Even more preferred are polyether polymers of the present invention, wherein the end-group fidelity of the polymer in regard to group X and group Y is at least 95% and most preferably of at least 98 %. Especially preferred are polyether polymers of the present invention, wherein the end-group fidelity of the polymer in regard to group X and group Y is at least 95% and the dispersity is 1.10 or less and most preferred wherein the end-group fidelity of the polymer in regard to group X and group Y is at least 98% and the dispersity is 1.10 or less. The end-group fidelity of a certain end group in a certain polymer is the fraction of the number of macromolecules of the polymer that bear the end group divided by the number of all macromolecules of the polymer.

In another embodiment of the present invention the polyether polymers are polyether polymers represented by the following formula [II]:

$$X\text{-}(CH_2CHR\text{-}O\text{-})_mCH_2CHR\text{-}Y \qquad [II]$$

wherein R has the same meaning as mentioned in the other embodiments of [I] and [II], wherein X is selected from group X as mentioned in the other embodiments of [I] and [II] or from the group consisting of hydroxyl and -O-X', wherein X' is selected from the group consisting of

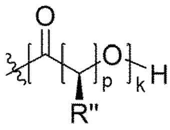 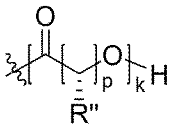 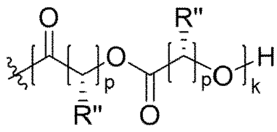

wherein R" = H or alkyl, alkenyl, aryl, alkoxymethyl, alkenyloxymethyl, aryloxymethyl, aminomethyl and thioalkoxymethyl, preferably
R" is alkyl, i.e.

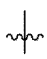 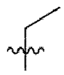 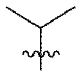 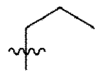 ,

or
alkenyl, i.e.

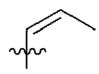 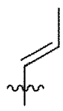 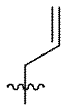 ,

or
aryl, i.e.

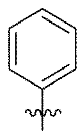 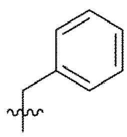 ,

or
alkoxymethyl, i.e.

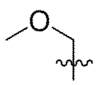 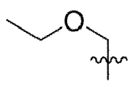 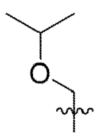 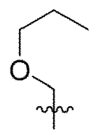 ,

or
alkenyloxymethyl, i.e.

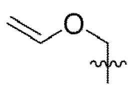 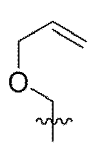 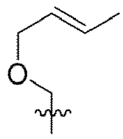 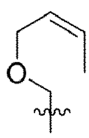 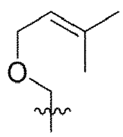 ,

or
aryloxymethyl, i.e.

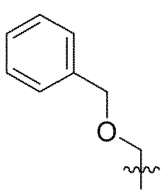 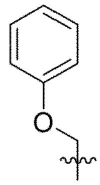 ,

or
aminomethyl, i.e.

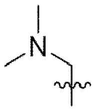 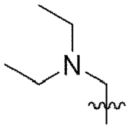 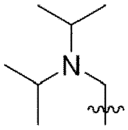 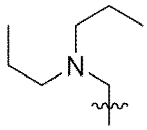

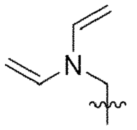 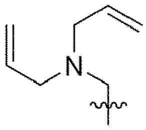 ,

wherein

p = 1, 2, 3, 4 or 5, and
k = 5-500, preferably 5-250, most preferably 10-200; and

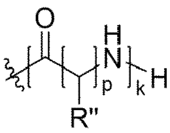 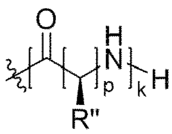 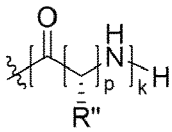

wherein R" = H or alkyl, alkenyl, aryl, alkoxymethyl, alkenyloxymethyl, aryloxymethyl, aminomethyl and thioalkoxymethyl, preferably
R" is alkyl, i.e.

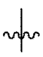 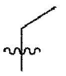 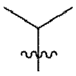 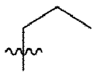 .

alkenyl, i.e. or

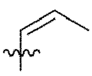 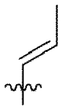 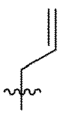 ,

or
aryl, i.e.

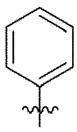 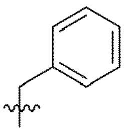 ,

or
alkoxymethyl, i.e.

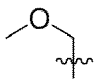 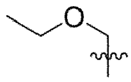 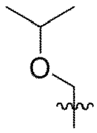 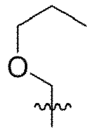 ,

or
alkenyloxymethyl, i.e.

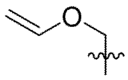 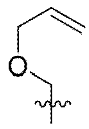 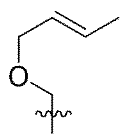 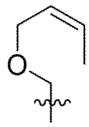 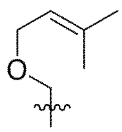 ,

or
aryloxymethyl, i.e.

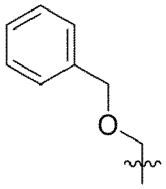 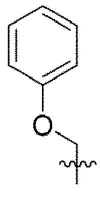 ,

or
aminomethyl, i.e.

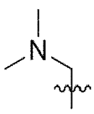 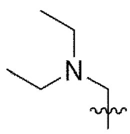 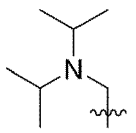 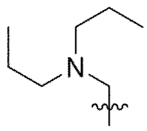

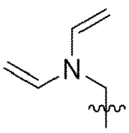 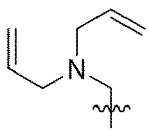 ,

, wherein

p = 1, 2, 3, 4 or 5 and
k = 5-500; preferably 5-250, most preferably 10-200; and

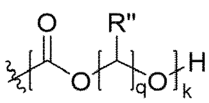

wherein R" = H or alkyl, alkenyl, aryl, alkoxymethyl, alkenyloxymethyl, aryloxymethyl, aminomethyl and thioalkoxymethyl, preferably
R" is alkyl, i.e.

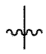 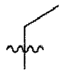 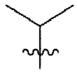 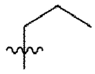,

or
alkenyl, i.e.

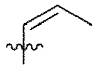 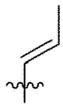 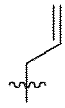,

or
aryl, i.e.

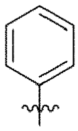 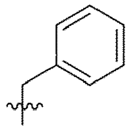,

or
alkoxymethyl, i.e.

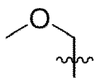 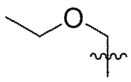 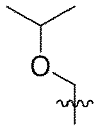 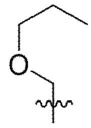,

or
alkenyloxymethyl, i.e.

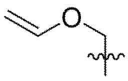 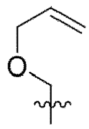 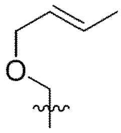 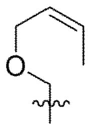 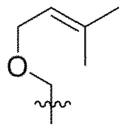,

or
aryloxymethyl, i.e.

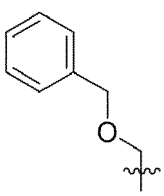 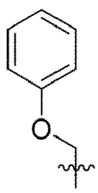,

, or
aminomethyl, i.e.

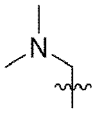 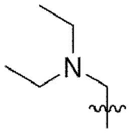 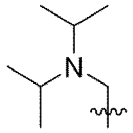 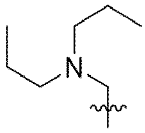

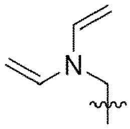 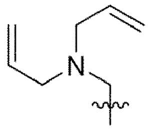 ,

wherein

q = 3, 4 or 5 and
k = 5-500, preferably 5-250, most preferably 10-200;

and

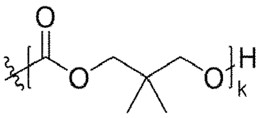

wherein k = 5-500, preferably 5-250, most preferably 10-200; and

wherein Y is -Z-W, wherein

Z is -O-R'-O- and

W is $-CH_2CHR-(O-CH_2CHR-)_{m'}-V$;

wherein V is X or X';

wherein R' is selected from the group consisting of

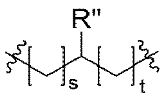

wherein

R" = H or alkyl, alkenyl, aryl, alkoxymethyl, alkenyloxymethyl, aryloxymethyl, aminomethyl and thioalkoxymethyl, preferably

R" is alkyl, i.e.

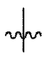 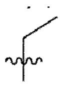 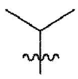 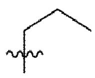 ,

or

alkenyl, i.e.

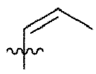 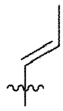 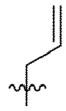,

or

aryl, i.e.

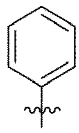 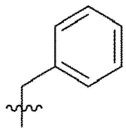,

or

alkoxymethyl, i.e.

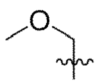 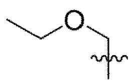 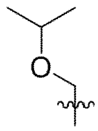 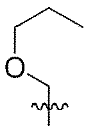,

or

alkenyloxymethyl, i.e.

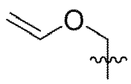 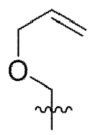 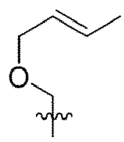 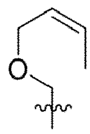 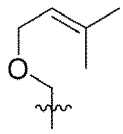,

or

aryloxymethyl, i.e.

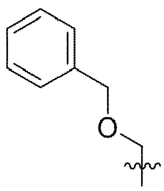 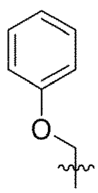,

or

aminomethyl, i.e.

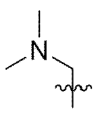 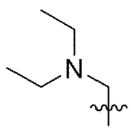 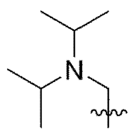 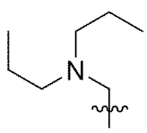

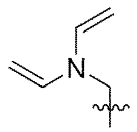 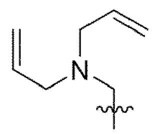 ;

wherein

s = 0-20

t = 0-20 , and

further R' may be selected from

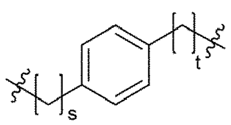

s = 0-20
t = 0-20

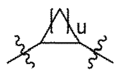

u = 1-10

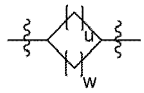

u = 1-10
w = 1-10

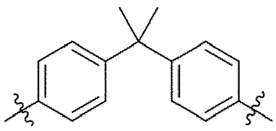

;

and wherein m and m' are independently of each other in the range of from 9 to 999.

In another embodiment block copolymers of P(EG-co-SCAGE) and aliphatic polyesters, especially poly-(lactic acid) (PLLA) are preferred, e.g. polymers of the present invention where X is $-O-CH_3$, -O-Bz, or -OH and Y is a PLLA-OH group and polymers of the present invention where X and Y are PLLA-OH groups and wherein "SCAGE" means "short chain glycidyl ether", with the glycidyl ethers and their amounts being defined in accordance with the residues R for any of formulae [I], [Ia] to [Ic], [II] or [IIa] to [IIc]). Especially preferred are diblock polymers MeO-P(EG-co-SCAGE)-b-PLLA-OH, BzO-P(EG-co-SCAGE)-b-PLLA-OH or HO-P(EG-co-SCAGE)-b-PLLA-OH and HO-P(EG-co-SCAGE)-b-PLLA-OH and triblock polymers such as HO-PLLA-b-P(EG-co-SCAGE)-b-PLLA-OH. Most preferred are these embodiments wherein the short chain glycidyl ether is ethyl glycidyl ether.

In all embodiments of Formula [II] m is in the range of from 9 to 999, more preferably in the range of 30 to 800. Most preferably m is in the range of 30 to 700. These ranges correspond to the polymer weights of PEG that are most suited for medical applications and that are used in existing medical application for PEG. Furthermore, the polymers of the present invention have preferably a molecular weight $M_n$ as determined by MALDI-TOF in the range of 500 to 50.000 g/mol, more preferably in the range of 1.000 to 50.000 g/mol and most preferably in the range of 1.000 to 30.000 g/mol. These ranges apply to all embodiments of the present invention.

The dispersity of all compounds of the present invention is 1.15 or less measured by size exclusion chromatography in DMF by calibration with PEG standards. Preferably the end-group fidelity of the polymer in regard to group X and group Y is at least 95% and the dispersity is 1.10 or less and most preferred are embodiments wherein the end-group fidelity of the polymer in regard to group X and group Y is at least 98% and the dispersity is 1.10 or less.

As aforementioned, the polymers of the present invention have similar properties as PEG, especially in biological systems. The present polymers may therefore substitute PEG in most of its applications. The polymers of the present invention are especially designed for use in the pharmaceutical and medical field. They may also be used with the same benefits in veterinary medicine and in other biological applications. In these fields the polymers of the present invention can fulfill the same functions as PEG but have reduced immunogenicity and antigenicity. Because of their irregular structure, they do not elicit a strong immune response. The inventive polymers show especially a low response to anti-PEG antibodies, as evidenced by ELISA tests. Conjugates used for masking drugs and other pharmaceutically active compounds usually comprise PEG in addition to a physiologically active compound or an adjuvant. The polymers of the present invention may be used instead of PEG in any such application. At the same time the immune response elicited by the present polymers will be weak or non-existent thereby resolving one of the main problems in the use of PEG.

A further aspect of the present invention is a conjugate comprising a polyether polymer and a substrate, wherein the polyether polymer is represented by the following formula [I]:

$-(CH_2CHR-O-)_m-$ [I]

wherein

- the residues R are independently from each other selected from the group consisting of hydrogen, ethoxymethyl, n-propoxymethyl and iso-propoxymethyl;
- at least one of the residues R is selected from the group consisting of ethoxymethyl, n-propoxymethyl and iso-propoxymethyl; and
- m is in the range of from 10 to 1000, characterized in that the dispersity is 1.15 or less measured by size exclusion chromatography in DMF by calibration with PEG standards.

As mentioned before, ethylene oxide repeating units and alkyl glycidyl ether repeating units, i.e. wherein R is alkoxymethyl, provide polymers with very similar properties. The properties of the polymers of the present invention are still closer to the properties of PEG, when at least some of the residues R are selected to be hydrogen. Furthermore, immunogenicity of copolymers comprising ethylene oxide repeating units will be reduced as compared to the homopolymer of alkyl glycidyl ethers, because their hydrophobicity leads to non-specific interactions with proteins. Therefore, the polymers of the conjugates of the present invention are preferably copolymers. More preferably they are random copolymers or statistical copolymers and most preferably they are statistical copolymers.

In one embodiment of the present invention the polyether polymers of the conjugates of the present invention may be block copolymers or may have a block like structure or a tapered or gradient structure. The methods to prepare such polymers are known to the expert in the art. In such embodiments it is preferred that no more than 5% of the macromolecules of the polymers comprise blocks with more than 15 ethylene oxide repeating units, more preferably that no more than 5% of the macromolecules of the polymers comprise blocks with more than 8 ethylene oxide repeating units. This reduces immunogenicity. Polyether polymers of the conjugates of the present invention may be random copolymers or statistical copolymers.

The polyether polymers of the conjugates of the present invention may also be any of the polyether polymers of the present invention as described herein, especially as described herein as preferred. They are preferably polyether polymers represented by the following formula [I]: $-(CH_2CHR\text{-}O\text{-})_m-$ [I] wherein the residues R are independently from each other selected from the group consisting of hydrogen, ethoxymethyl, n-propoxymethyl and iso-propoxymethyl, with the proviso that the polyether polymers comprise at least two different residues R; and m is in the range of from 10 to 1000, characterized in that the polyether polymers are statistical copolymers and in that the dispersity is 1.15 or less measured by size exclusion chromatography in DMF by calibration with PEG standards. More preferred they are polyether polymer of Formula [I], wherein 30 to 85% of the residues R are hydrogen and the remaining residues R are independently from each other selected from the group consisting of ethoxymethyl, n-propoxymethyl and iso-propoxymethyl. Even more preferred they are polyether polymers selected from the group consisting of poly(ethyl glycidyl ether-co-ethylene oxide) copolymers, poly(n-propyl glycidyl ether-co-ethylene oxide) copolymers and poly(iso-propyl glycidyl ether-co-ethylene oxide) copolymers. Most preferred the polyether polymers of the conjugates of the present invention are represented by the following formula [II]: $X\text{-}(CH_2CHR\text{-}O\text{-})_mCH_2CHR\text{-}Y$ [II] wherein R is as defined for Formula [I], wherein X is selected from the group consisting of hydrogen, alkyl, hydroxy, sulfanyl, C1-C10-alkoxy, C1-C10-thioalkoxy, amino, amino-C1-C10-alkoxy, dibenzylamino-C1-C10-alkoxy, amide, N-heterocyclic carbenes and N-heterocyclic olefins; Y is selected from the group consisting of hydrogen, hydroxy, alkoxy, $-CH_2\text{-}C(=O)\text{-}R$ wherein R is as defined above, -CHO, alkylcarbonyloxy, alkyoxycarbonyloxy, amine, C1-C10-alkylamine, carboxamido, azide, halogen, sulfanyl, thioalkoxy, N-succinimidyl carbonate and sulfonate; X and/or Y may also be selected from the group consisting of low molecular weight drugs, nanocarriers, liposomal structures, peptides, polypeptides, proteins, glycoproteins, polynucleotide, polysaccharides, lipid structures, liposomes, aliphatic polyester, preferably poly-(lactic acid), surfaces and interfaces, which are bonded directly by a covalent bond or by a spacer to the polymer and m is in the range of from 9 to 999. Among the aliphatic polyesters, polyesters selected from the group consisting of poly-(lactic acid) (PLA), poly-(L-lactic acid) (PLLA), poly-(D-lactic acid) (PDLA) and poly(glycolide-co-lactide) (PGLA) are preferred. In the conjugates of the present invention a polymer of the present invention is bonded to a substrate directly or indirectly by a covalent bond. The polymer of the present invention may be bonded to the substrate by a spacer, which constitutes an indirect bond. The substrate may be selected from the group consisting of a pharmaceutically active compound, an adjuvant, a surface and interfaces. The pharmaceutically active compound is preferably selected from the group consisting of low molecular weight drugs, peptides, polypeptides, proteins, glycoproteins, polynucleotides and polysaccharides. The adjuvant is preferably a vesicle or carrier, which are preferably used to carry a pharmaceutically active compound. The adjuvant is preferably selected from the group consisting of nanocarriers, liposomal structures, lipid structures and liposomes. Nanocarriers usable in the present invention are for example selected from the group consisting of carbon nanotubes (CNT), dendrimers, gold nanorods, lipid nanoparticles, liposomes, micelles, nanocrystals, niosomes, polymeric nanoparticles (PNP), solid lipid nanoparticles (SLNs) and virus-based nanoparticles (VNP). In a further preferred embodiment the substrate is selected from the group consisting of low molecular weight drugs, nanocarriers, liposomal structures, peptides, polypeptides, proteins, glycoproteins, polynucleotides, polysaccharides, lipid structures, liposomes, surfaces

and interfaces. Also in these embodiments the substrate may be bonded directly by a covalent bond or by a spacer to the polymer. Especially preferred are conjugates of the present invention with bovine serum albumin.

The polymer of the present invention may be bonded to the substrate directly by a covalent bond or by a spacer of any kind. Preferably a hydroxy-residue at the ω-terminal of the polymer of the present invention is used to bond a substrate or a spacer to the polymer. This is most economical, as the polymers of the present invention where X is an inert group and Y is OH can be most easily be prepared (see Examples). The conjugation of a substrate to the OH group at the ω-terminal end of PEG is well established. The same processes may be used for the polymers of the present invention. The substrate may however also be bonded to the α-terminal of the polymer. The polymers of the present invention can also be bonded to more than one substrate. This can be done by use of the α-terminal and the ω-terminal of the polymer and by using functional end groups of the polymer or spacer that can bond to a plurality of substrates. This may also be achieved by use of co-monomers with functional groups to which a substrate may be bonded. The bond between the polymers of the present invention and the substrate may be prepared by any means currently used for bonding PEG to substrates. It is also possible to bond a plurality of macromolecules of the polymers of the present invention to one substrate. This is especially useful for vesicle of all kinds including liposomes.

Typical examples for PEG conjugates are the lipid nanoparticles that are essential for vaccines against Covid-19 of the firms BioNTech SE and Pfizer Inc. and Moderna. It comprises a PEG conjugate of lipids, and the lipid nanoparticles (LNPs) are used to encapsulate and protect mRNA, which is the pharmaceutically active substance. The PEG in these conjugates may be substituted by the polymers of the present invention, thereby retaining the effects of the PEG polymer in the conjugate and at the same time reducing the immune response to the conjugate. A further vaccine of this kind is the Covid-19 vaccine of Curevac. Further drugs that comprise PEG conjugates wherein the PEG could be substituted by the present polymers are listed in the following.

Table 1

| Trade names | Chemical Structure | Indication |
|---|---|---|
| Jivi® | 60k-PEG recombinant Factor VII antihemophilic factor | Hemophilia A |
| Palynziq® | 2K-PEG-rhu-Phenylalanine ammonia-lyase, Pegvaliase-pqpz | Phenyl-ketonuria |
| Adynovate® | 20K-PEG-Factor VIII Antihemophilic Factor VIII | Hemophilia A |
| Revolixys® kit | 40K-PEG-RNA aptamer + reverse agent, Factor-IXa blocker, Pegnivacogin /Anivamersen | Anti-coagulation |
| Onicyde® | 2K-PEG-Liposomal irinotecan hydrochloride trihydrate | Metastatic pancreatic cancer |
| Plegridy® | 20k PEG-Interferon β-1a | Relapsing from multiple sclerosis |
| Movantic® | <1k PEG-Naloxegol | Opioid-induced constipation |
| Omontys® | 40K-PEG-Erythropoietin-mimetic peptide, Peginesatide | Anemia associated with chronic kidney disease |
| Sylatron® | 12K-PEG-Interferon α-2b | Melanoma |
| Krystexxa® | 10k-PEG-Uricase, Pegloticase | Gout |
| Cimzia® | 40k-PEG-Certolizumab | Rheumatoid arthritis, Crohn's disease, Axial spondyloarthritis |
| | | and psoriatic arthritis |
| Mircera® | 30K-PEG- erythropoietin (epoetin) β | Anemia associated with chronic kidney disease |
| Macugen® | 40K-PEG-anti-VEGF aptamer, Pegaptanib | Age-related macular degeneration |

(continued)

| Trade names | Chemical Structure | Indication |
|---|---|---|
| Somavert® | 5K-PEG-rhuGH (human growth hormone), Pegvisomant | Acromegaly |
| Neulasta® | 20K-PEG-Granulocyte colony stimulating factor, Pegfilgrastim | Neutropenia |
| Pegasys® | 40K-PEG-interferon α-2 | Hepatitis C und B |
| PegIntron® | 12K-PEG-interferon α-2b | Hepatitis C und B |
| Doxil®/Caelyx® | 2K-PEG-Liposomal doxorubicin HCl | Cancer |
| Oncaspar® | 5K-PEGylated L-asparaginase, Pegaspargase | Acute lymphoblastic leukemia |
| Adagen® | 5K-PEG-adenosine deaminase (bovine), Pegademase | Severe combined immunodeficiency disease (SCID) |
| Irinotecan® | PEGylated liposomal irinotecan hydrochloride trihydrate | Metastatic pancreatic cancer |
| Lonquez® | 20k PEG-rhG-CSF | Neutropenia |
| Jintrolong®[1] | Branched 40k PEG hGH | hGH deficiency |
| Neulapeg® | 20k-PEG rhG-CSF mutein | Neutropenia |
| Rebinyn®/ Refixia® | Branched 40k PEG Recombinant factor VIII | Hemophilia B |
| Asparlas® | 5k-PEG L-Asparaginase | Acture lymphoblastic leukemia |
| Revcovi® | 5k-PEG Recombinant B-domain truncated factor VIII | Hemophilia A |
| Besremi®[3] | Branched 40k PEG Prolineinterferon α-2b | Polycythemia vera |
| PEGPH20®[3] | 30k-PEG recombinant human hyaluronidase | Pancreatic cancer |
| Pegargiminase | 20k PEG Arginine deiminase Interleukin-2 | Hepatocellular carcinoma |
| NKTR-214 | Branched PEG-20k Fmocsuccinimidyl carbonate | Melanoma, rencal cell carcinoma |
| PRX-201[3] | Bifunctional PEG2k α-Galactosidase A | Fabry disease |
| Peginterferon lambda-1a | 20k PEG recombinant interferon lambda-1a | Hepatitis C and B[2], Hepatitis D[3] |
| Abicipar pegol | 20k PEG anti-VEGF DARPin | Neovascular age related macular degeneration |
| TransCon GH®[3] | Four-arm-40PEG spacer hGH | Growth hormone deficiency |
| AM0010[2] | 30k PEG-Interleukin-10 | Metastatic pancreatic cancer |
| Rolontis®[3] | Bifunctional PEG rhG-CSF | Neutropenia |
| Efpeglenatide[3] | Bifunctional PEG Exendin-4 (glucagon-like peptide-1 receptor agonist) | Type-2 diabetes mellitus |

(continued)

| Trade names | Chemical Structure | Indication |
|---|---|---|
| Pegbelfermin[2] | 30k PEG fibroblast growth factor-21 mutein | Fibrosis, liver disorders, nonalcoholic steatohepatitis, type 2 diabetes mellitus |
| Imrestor® (veterinary use) | 20k PEG recombinant bovine G-CSF mutein | Reducing risk of clinical mastitis |
| Pegfilgrastim biosimilars:<br>Fulphila (Mylan®) Lapelga/Pelgraz | 20K-PEG-Granulocyte colony stimulating factor, Pegfilgrastim, rhG-CSF | Neutropenia |
| (Apobiologix®), Udenyca (Coherus Biosciences®), Pelmeg (Mundipharma®), Ziextenzo (Sandoz®) | | |
| Esperoct® | Branched-PEG40k-SA-CMP, enzymatic glycopegylation at O-glycan on Ser-750 | Hemophilia A |
| [1] only in China<br>[2] Phase II<br>[3] Phase III | | |

In another embodiment of the invention the invention relates to a process for the preparation of a polyether polymer by anionic ring-opening copolymerization (AROP) comprising the steps of:

- Providing an anion $An^-$,
- Adding at least one monomer of the formula , wherein R is as defined as described for any of formulae [I] or [II],
- Allowing the polymerization to proceed at a temperature in the range of -10 to 90 °C.

In the process of the present invention the anion $An^-$ must be an anion suitable for anionic ring-opening copolymerization (AROP). The expert in the art can easily choose among the known anions for this purpose. The $An^-$ anion may be selected from the groups consisting of alkyl anion, hydride, $OH^-$, alkoxy$^-$, $SH^-$, thioalkoxy$^-$, amine anion, amide anion, imide anion and combinations thereof. Alkyl anions and hydride anions may be provided in the form of metal alkyl or metal hydride compounds. The anion $An^-$ may have a structure corresponding to any of the structures discloses herein for the residue X, i.e. $An^-$ may be $X^-$. Especially the alkoxy anion and the thioalkoxy anion may be the corresponding anion with the same structure as any of the alkoxy groups and aryloxy groups and aralkoxy groups defined herein for the residue X. Preferably however the alkoxy anion and the thioalkoxy anion are not tertiary alkoxy anions. The imide anion is preferably a phthalimide anion. Polymers of the Formulae [Ia], [Ic], [IIa] and [IIc] may be prepared by first adding the corresponding amount of ethylene oxide to the anion $An^-$and allowing the polymerization to proceed at a temperature in the range of -10 to 90 °C until all of the ethylene oxide is consumed. Subsequently the steps of adding at least one monomer of the formula -R, and allowing the polymerization to proceed at a temperature in the range of -10 to 90 °C are performed. In this manner the repeating units adjacent to the $\alpha$-terminal of the polymers of the present invention are provided with exactly the same structure as PEG. Polymers of the Formulae [Ia], [Ic], [IIa] and [IIc] may also be prepared by use of anions of the formulae $X-(CH_2CH_2-O-)_a^-$, wherein a is as defined for any of the Formulae [Ia], [Ic], [IIa] and [IIc] and X is any residue as defined herein for X. X' is any residue as defined herein for X'. This is the preferred method. Especially preferred is the use of such anions of the formulae $X-(CH_2CH_2-O-)_a^-$, in which X is alkyl, alkoxy, dialkylamin anion or $(RCO)_2N^-$. Even more preferred is the use of anions selected from the group consisting of $MeOCH_2CH_2O^-$, $MeO(CH_2CH_2O)_2^-$, $BenzylOCH_2CH_2O^-$, $BzO(CH_2CH_2O)_2^-$, $(Bz)_2N-CH_2CH_2O^-$, $(Bz)_2N-(CH_2CH_2O)_2^-$, phthalimide-$CH_2CH_2O^-$, phthalimide-$(CH_2CH_2O)_2^-$, wherein Me is methyl and Bz is benzyl. Most preferred are $MeO(CH_2CH_2O)_2^-$, $BzOCH_2CH_2O^-$ and $(Bz)_2N-CH_2CH_2O^-$.

In addition, in order to synthesize bifunctional initiated $\alpha,\omega$-OH-P(EG-co-SCAGE) copolymers of the present invention (with SCAGE = short chain glycidyl ether, with the glycidyl ethers and their amounts being defined in accordance with the residues R for any of formulae [I], [Ia] to [Ic], [II] or [IIa] to [IIc]) that enable the synthesis of ABA triblock copolymers, P(EG-co-SCAGE) bearing two hydroxyl-termini is preferably used as an macroinitiator for ring-opening polymerization of cyclic polyesters, cyclic diesters or cyclic monoesters, e.g. L-lactide, D-lactide, meso-lactide, cyclic carbonates, such

as trimethylene carbonate (TMC), 2,2-dimethyl-trimethylene carbonate (DTC), 5-butyl-1,3-dioxan-2-one and 1,3-dioxepan-2-one; glycolide, other cyclic esters and lactams and N-carboxy anhydrides. In an embodiment of the invention the reaction is performed using L-lactide enabling the synthesis of e.g. PLLA-*b*-P(EG-*co*-SCAGE)-*b*-PLLA, wherein PLLA means

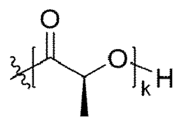

, wherein k = 5-500, preferably 5-250, most preferably 10-200. The polymerization is preferably catalyzed by Lewis acids e.g. triethylaluminum ($AlEt_3$) and tin(II) bis-(2-ethylhexanoate) (Sn(Oct)2) or organic bases e.g., DBU (1,8-Diazabicyclo[5.4.0]undec-7-ene) and *N*-methyl-1,5,7-triazabicyclo[4.4.0]dec-5-ene. The described procedure is not limited to triblock copolymers. With the utilization of a monofunctional P(EG-co-SCAGE) macroinitiator, diblock copolymers (P(EG-co-SCAGE)-b-PLLA) are obtained.

In these embodiments $An^-$ can be selected from the group consisting of $alkoxy^-$, $thioalkoxy^-$ and amine anion.

Further, in a final step of the preparation, addition of a small amount of pure EO is possible to ensure primary hydroxyl end groups for the ω-terminal of the polymer that can undergo all established coupling strategies to therapeutic entities. This leads to polymers of the present invention with Formulae [Ib], [Ic], [IIb] and [IIc].

The counter ion to the $An^-$ anion is preferably selected from the group consisting of $Na^+$, $K^+$ and $Cs^+$. The anion $An^-$ may be provided in an inert solvent.

The anionic ring-opening polymerization of epoxides can be conducted in non-protic solvents like DMSO or other polar aprotic solvents, e.g., tetrahydrofuran (THF), methyl-THF, cyclopentyl methyl ether (CPME), benzene, toluene, xylene, HMPA, dioxane, diglyme etc.

The solvent is preferably a non-protic solvent and most preferably dimethyl sulfoxide (DMSO). Also preferably the reaction is performed in the same solvent.

Anionic ring-opening polymerizations with alkyl glycidyl ethers are more prone to undergo chain transfer reactions as follows:

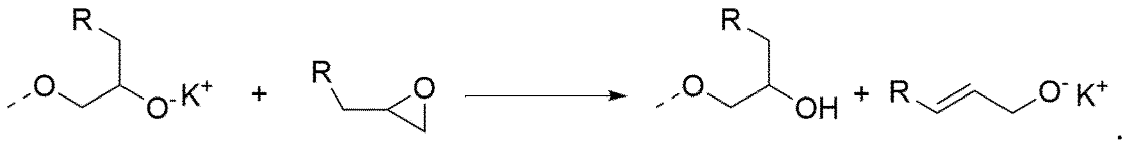

These side reactions increase with the temperature. Therefore, high molecular weight polymers can only be obtained, if the reaction temperature is not above 90°C. The chain transfer reaction results in a broad distribution of molecular weight and therefore in a high dispersity. Therefore, lower polymerization temperatures also provide polymers of the present invention with lower dispersity. On the other hand, alkyl glycidyl ethers are as reactive in the anionic ring-opening polymerization as ethylene oxide. For this reason the polymerization may be performed at temperatures as low as -10°C. Preferably the polymerization is performed at a temperature in the range of 10 to 70°C and more preferred at a temperature in the range of 10 to 60°C.

Furthermore, high temperatures also lead to side reactions of the starting anion $An^-$ or the group X of the living polymer. Limitation of the temperature in the aforementioned range therefore also improves the end-group fidelity at the α-terminal of the polymers of the present invention and allows for end-group fidelities of 95% or more of the X residue. Other known methods for the polymerization of the alkyl glycidyl ethers do not provide the low dispersity required for the present polymers. They also do not allow for the same high end-group fidelity.

In order to provide statistical copolymers of the present invention, it is necessary to add at least two different kinds of monomers to the anion. The reactivity ratios for both alkyl glycidyl ether employed and ethylene oxide is in the range of 0.7 to 1.3 or 0.6 to 1.7. This results in statistical copolymers. Other forms of copolymers of the present invention, i.e. with a block structure, block like structure or a tapered or gradient structure can be prepared according to known methods.

A further embodiment of the present invention is the use of the polyether polymers of the present invention for the preparation of a conjugate of the polymers with a substrate. The polymers and the substrate are as defined herein for the conjugates of the present invention. The substrate is preferably a bioactive compound. There is a well-developed chemistry for the preparation of conjugates of PEG, which is known to the expert in the art. The same chemistry may be used for the preparation of a conjugate of the present invention. Preferred is a use of the present invention, for the preparation of conjugated lipids for use in vaccines, in particular based on lipid nanoparticles. These nanoparticles are

preferably nanoparticles, as used against COVID-19. Preferred are conjugates of polymers of the present invention with bovine serum albumin (BSA). Especially preferred are conjugates with polymers of the present invention where the Y group of the polymer is a maleinimid group. Even more preferred are conjugates of the present polymer where bovine serum albumin is conjugated by means of such a group Y to a polymer of the present invention. Conjugation of P(EG-*co*-SCAGE) to bovine serum albumin is especially preferred wherein "SCAGE" means "short chain glycidyl ether", with the glycidyl ethers and their amounts being defined in accordance with the residues R for any of formulae [I], [Ia] to [Ic], [II] or [IIa] to [IIc]). Most preferred is the conjugation of P(EG-co-EGE) to bovine serum albumin.

An additional embodiment for the present invention concerns the preparation of conjugates of the present invention. As discussed above, the conjugates may be prepared by any known process for the preparation of conjugates of PEG. The present invention provides additionally a process, where firstly the process for the preparation of the polymers of the present invention is performed and then a substrate is added to the living polymer, wherein the substrate has a functional group that reacts with the living polymer to form a conjugate.

Brief description of the figures:

| | |
|---|---|
| Figure 1: | $^1$H NMR spectrum of P($EG_{0.49}$-co-$EGE_{0.51}$) (Polymer c; Example 1). |
| Figure 2: | SEC traces of Polymers a, b, c, d and e (see Example 1 and Tables 2 and 3). |
| Figure 3: | $^1$H NMR spectrum of P($EG_{0.89}$-co-$IPGE_{0.11}$) (Polymer g; Example 2). |
| Figure 4: | SEC traces of Polymers f, g, h and i (see Example 2 and Tables 2 and 3). |
| Figure 5: | Native SDS PAGE of a conjugate of $\alpha$-MeO-P($EG_{0.89}$-co-$iPGE_{0.11}$)-Mal with bovine serum albumin (BSA; Example 5). |
| Figure 6: | Results of the ELISA measurements of three of the polymers of the present invention and of mPEG (Polymers g, h and i; Example 6). |
| Figure 7: | Monomer consumption vs. total conversion (a) EO/EGE, $Cs^+$; b) EO/iPGE, $K^+$ (Example 7). |

List of abbreviations:

| | |
|---|---|
| APAs | anti-PEG antibodies |
| BSA | bovine serum albumin |
| Bz | benzyl group |
| DMF | dimethylformamide |
| DMSO | dimethylsulfoxide |
| EO | ethylene oxide |
| EG | ethylene glycol |
| EGE | ethyl glycidyl ether |
| iPGE | iso-propyl glycidyl ether |
| Me | methyl rest |
| nPGE | n-propyl glycidyl ether |
| PDI | dispersity |
| PEG | poly(ethylene glycol) |
| PLLA | poly-(lactic acid) |
| Mal | maleimide rest |
| MALDI-ToF | matrix-assisted laser desorption/ionization - time of flight mass spectrometry |
| MalFu | 3a,4,7,7a-tetrahydro-1H-4,7-epoxyisoindole-1,3(2H)-dione-2-yl rest (3,6-epoxy-1,2,3,6-tetrahydrophthalimide rest) |
| SCAGE | short chain glycidyl ether |
| SEC | size-exclusion chromatography |

Examples:

Reagents:

Chemicals were purchased from TCI, Acros Organics, Roth, Sigma Aldrich and Honeywell, unless otherwise noted. Ethylene oxide was obtained from Air Liquide. Deuterated solvents were purchased from Deutero GmbH. THF

was flashed over basic aluminum oxide before usage. Glycidyl methyl ether was dried over $CaH_2$ and cryo-transferred before the polymerizations. The PEG standards ($M_n$ = 106-30700 g/mol) were purchased from polymer standards service GmbH (PSS), Germany.

Measurements:

$^1H$ and $^{13}C$ NMR spectra were recorded on a Bruker Avance III HD 300 spectrometer with 300 MHz and referenced internally to residual proton signals of the deuterated solvent. In case of $^1H$ DOSY NMR, spectra were recorded on a Bruker Avance III HD 400 spectrometer with 400 MHz and referenced internally to residual proton signals of the deuterated solvent.

$M_w$, $M_n$ and dispersities ($M_w$/$M_n$ = PDI) of all samples were determined from the corresponding size exclusion chromatograms (refractive index (RI) detector, DMF, calibration with PEG standards).

Size-exclusion chromatography (SEC) measurements were performed with dimethylformamide (DMF with 1 g/L LiBr) as the mobile phase (flow rate 1 mL/min) on poly(2-hydroxyethylmethacrylat) (PHEMA) 300/100/40 columns at 50 °C. Polymer concentrations were 1 mg/mL. Calibration was carried out using poly(ethylene glycol) standards (from Polymer Standard Service, Mainz, Germany).

The separation of protein and protein-polymer conjugate was performed via anion exchange chromatography. A custom-built system consisting of a HiScreen™ Capto Q™ column (column volume (CV) 4.7 mL) from $C_{YTIVA}$, a HPLC pump as well as a UV detector from $K_{NAUER}$ were used. All solvents were degassed via ultrasonic and filtered through 0.45 μm PTFE filters. Optima™ LC-MS grade water (FISHER CHEMICALS) was used for buffer preparation and column rinsing. A 50 mM phosphate buffer, pH 6.5, were used as starting & washing buffer. The elution was performed using a 50 mM phosphate buffer, pH 6.5, with an increasing sodium chloride concentration (50 mM - 300 mM NaCl). First the column was washed with 1 CV (column volume = 4.7 mL) water and equilibrated with 5 CV starting buffer. The reaction mixture, which was previously dialyzed against the starting buffer and diluted with the starting buffer, was loaded onto the column at a flow rate of 1.2 mL/min. The column was washed with at least 5 CV starting buffer at a flow rate of 4 mL/min until the UV baseline was stable. The salt strength (NaCl) was gradually increased with 5 CV for each concentration at a flow rate of 2 mL/min. The fractions were collected manually according to significant changes in the UV intensity.

MALDI-ToF MS measurements were carried out at a Bruker autoflex maX MALDI-TOF/TOF. The potassium or sodium salts of trifluoroacetic acid and trans-2-[3-(4-tert-Butylphenyl)-2-methyl-2-propenylidene]malononitrile (DCTB) were utilized as ionization salt and matrix, respectively.

Example 1: General procedures for the preparation of statistical copolymers Synthesis of α-BzO-P($EG_{0.48}$-*co*-$EGE_{0.52}$) (Polymer c)

$$Ph\text{-}CH_2\text{-}O\text{-}CH_2\text{-}CH_2\text{-}O\text{-}[CH_2\text{-}CH_2\text{-}O\text{-}]_{0.48}[CH_2CH(CH_2\text{-}O\text{-}CH_2\text{-}CH_3)\text{-}O\text{-}]_{0.52}H$$

Cesium hydroxide monohydrate (36.0 mg, 210 μmol) was dissolved in a THF-water mixture and transferred into a reaction flask, equipped with a Teflon stopcock and a septum. 2-Benzyloxy-ethanol (36.3 mg, 230 μmol) was dissolved in benzene and added to the reaction flask. After slow evaporation of the solvent, the resulting solid was dried at 60 °C under high vacuum overnight. EGE (669 mg, 720 μL, 6.67 mmol) was dissolved in DMSO (10 mL) and added via syringe to the resulting solid (i.e. the initiator) under cooling with liquid nitrogen. EO (294 mg, 300 μL, 6.67 mmol) was cryo-transferred from a graduated ampule into the reaction flask. The solution was stirred for 24 h at room temperature under vacuum. Afterwards, the solution was poured into excess dichloromethane and the organic phase was extracted against water (3 times) and brine, dried over $MgSO_4$ and filtrated. P($EG_{0.48}$-*co*-$EGE_{0.52}$) was obtained as a viscous liquid after evaporation of the solvent and drying under high vacuo (736 mg, 75%). The $^1H$ NMR spectrum of this polymer is shown in Figure 1. Besides Polymer c four more copolymers of ethylene oxide and ethyl glycidyl ether were prepared according to this procedure, i.e. Polymers a, b, d and e. Data of Polymers a to e are shown in Tables 2 and 3 below. The SEC traces thereof are shown in Figure 2.

Example 2: Synthesis of α-MeO-P($EG_{0.89}$-*co*-$iPGE_{0.11}$) (Polymer g)

$$CH_3\text{-}CH_2\text{-}CH_2\text{-}O\text{-}CH_2\text{-}CH_2\text{-}O\text{-}[CH_2\text{-}CH_2\text{-}O\text{-}]_{0.89}[CH_2CH(CH_2\text{-}O\text{-}CH\text{-}(CH_3)_2)\text{-}O\text{-}]_{0.11}H$$

Potassium tert-butoxide (25.0 mg, 225 μmol) was dissolved in a THF-water mixture and transferred into a reaction flask,

equipped with a Teflon stopcock and a septum. 2-(2-Methoxyethoxy)ethanol (30.0 mg, 250 μmol) was dissolved in benzene and added to the reaction flask. After slow evaporation of the solvent, the resulting solid was dried at 60 °C under high vacuum overnight. The residue was dissolved in DMSO (5 mL) and the solution was cooled to -78 °C. iPGE (329 mg, 356 μL, 2.83 mmol) was added via syringe to the initiator solution. EO (1.04 g, 1.04 mL, 22.9 mmol) was cryo-transferred from a graduated ampule into the reaction flask. The solution was stirred for 24 h at 30 °C under vacuum. The solution was quenched with water and the solvents were lyophilized. The residue was dissolved in dichloromethane and the organic phase was extracted against water (3 times) and brine, dried over $MgSO_4$ and filtrated. P($EO_{0.89}$-*co*-$iPGE_{0.11}$) was obtained in quantitative yield after evaporation of the solvent and drying under high vacuo. The $^1$H NMR spectrum of this polymer is shown in Figure 3. Besides Polymer c three more copolymers of ethylene oxide and iso-propyl glycidyl ether were prepared according to this procedure, i.e. Polymers f, h and i. Data of Polymers f to i is shown in Tables 2 and 3 below. The SEC traces thereof are shown in Figure 4.

Example 3: General procedure for the end group activation of Copolymers α-MeO-P($EG_{0.89}$-*co*-$iPGE_{0.11}$)-MalFu (Entry j)

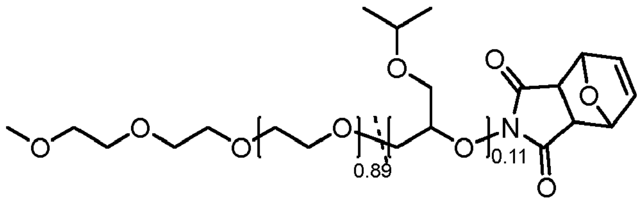

α -MeO-P($EG_{0.89}$-*co*-$iPGE_{0.11}$) (500 mg, 85.0 μmol) was dissolved in benzene and lyophilized. Triphenylphosphine (88.9 mg, 339 μmol) was dissolved in a separate flask in benzene and lyophilized. The lyophilized triphenylphosphine was dissolved in dry dioxane (1 mL). The solution was cooled to 0 °C and diisopropyl azodicarboxylate (7.00 μL, 339 μmol) was added. After stirring for 30 min at room temperature, a solution of the lyophilized α-MeO-P($EG_{0.89}$-*co*-$iPGE_{0.11}$) in dry dioxane (4 mL) was added and stirred for 30 min. 2-Hydroxy-3a,4,7,7a-tetrahydro-1H-4,7-epoxyisoindole-1,3(2H)-dione (61.4 mg, 339 μmol) was added and the resulting solution was stirred for 2 d at 50 °C. The solvent was evaporated under vacuum. After dialysis against methanol, pure α-MeO-P($EG_{0.89}$-*co*-$iPGE_{0.11}$)-MalFu (74%) was obtained.

Example 4: Synthesis of α-MeO-P($EG_{0.89}$-*co*-$iPGE_{0.11}$)-Mal (Entry k)

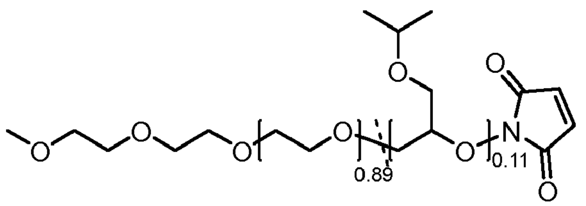

α -MeO-P($EG_{0.89}$-*co*-$iPGE_{0.11}$)-MalFu (71.4 mg, 123 μmol) was heated at 120 °C for 3 h under high vacuum to yield α-MeO-P($EG_{0.89}$-*co*-$iPGE_{0.11}$)-Mal (69.0 mg, 98%).

Example 5: Conjugation of α-MeO-P($EG_{0.89}$-*co*-$iPGE_{0.11}$)-Mal to bovine serum albumin (BSA)

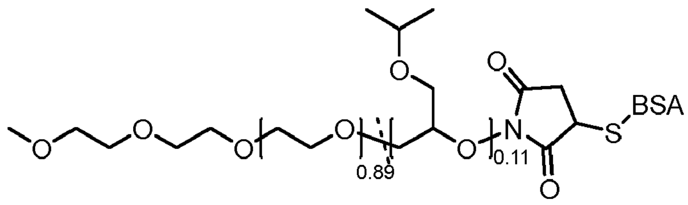

$\alpha$ -MeO-P($EG_{0.89}$-*co*-$iPGE_{0.11}$)-Mal (69.0 mg, 121 μmol) was dissolved in phosphatebuffered saline (PBS buffer) and added to bovine serum albumin (10.0 mg, 150 nmol) and the solution was shaken for 2 d. The reaction was quenched with a tenfold excess PBS buffer. The crude conjugate was dialyzed against PBS buffer and purified via anionexchange chromatography as described above. Figure 5 shows the corresponding sodium dodecyl sulfate polyacrylamide gel electrophoresis (SDS PAGE) for the different fractions (main and mixed fractions) after anion exchange chromatography (IEX). Fraction 6.1 shows the purified BSA copolymer conjugate.

Example 6: Competitive Enzyme-linked Immunosorbent Assay (ELISA)

The interaction of the copolymer samples entry c, d and e were evaluated by a competitive PEG ELISA kit using a murine monoclonal, horseradish peroxidase conjugated anti PEG antibody (HRP anti-PEG) (Life diagnostics, West Chester, PA, USA). Samples of concentrations ranging from 0 to 6370 $\mu g\ ml^{-1}$ were prepared in dilution buffer. Additionally, mPEG with a molecular weight of 5000 g $mol^{-1}$ was utilized as internal standard for comparison. 50 μl of each prepared sample was dispensed to a PEG precoated 96-well plate and 50 μl of HRP anti-PEG was added to each well. The solutions were incubated for 1h at 25 °C with a micro-plate shaker and then washed six times with 400 μl of wash buffer per each well. After removal of residual droplets, 100 μl of 3,3',5,5'-Tetramethylbiphenyl-4,4'-diamine was added to each well and the solutions were mixed on a micro-plate shaker for 20 min. The reaction was stopped by addition of 100 μl of stop solution (HCl solution) and the absorbance at 450 nm was read within 5 minutes.

Analysis of ELISA Data: The determined absorbance values were normalized to visualize the percent of maximal binding. The sample concentrations were transformed to a function of $\log_{10}$. The sigmoidal fits were calculated using the following equation with a representing the upper, b the lower limit, c the inflection point and d the hill slope.

$$y = a + (b-a) / 1 + 10^{(c-x)*d}$$

The results are shown in Figure 6.

Example 7: Kinetic Investigation of the Copolymerization of EO and SCAGE

The synthesis of P(EG-co-SCAGE) was repeated in fully deuterated DMSO for an online in situ $^1$H NMR kinetic measurement. SCAGE and EO were dissolved in fully deuterated DMSO. The consumption of EO and SCAGE over time was measured by $^1$H-NMR spectroscopy. As measure for the EO concentration, the signal of the protons of ethylene oxide at about 2.6 ppm was used. For SCAGEs the signals of the protons at the oxirane ring with a signal at about 2.7 ppm was used. Figure 7 shows the plots of monomer consumption $M_t/M_0$ versus total conversion. As can be seen, in comparison of SCAGE, EO is consumed at a slightly faster rate in both cases. The copolymers produced are therefore statistical copolymers.

Discussion of the results Tables 2 and 3 show the properties of the polymers prepared. They are discussed in the following.

Table 2: Composition of polymers prepared

| *Polymer* (Example) | *Sample* | $DP_{EO}$ NMR | $DP_{SCAGE}$ NMR | $mol\%_{EO}$ NMR | $mol\%_{SCA}$ GE NMR |
|---|---|---|---|---|---|
| a (1) | $\alpha$-BzO-P($EG_{0.74}$-*co*-$EGE_{0.26}$) | 53 | 19 | 74 | 26 |
| b (1) | $\alpha$-BzO-P($EG_{0.62}$-*co*-$EGE_{0.38}$) | 43 | 25 | 62 | 38 |
| c (1) | $\alpha$-BzO-P($EG_{0.48}$-*co*-$EGE_{0.52}$) | 27 | 29 | 48 | 52 |
| d (1) | $\alpha$-BzO-P($EG_{0.40}$-*co*-$EGE_{0.60}$) | 22 | 33 | 40 | 60 |
| e (1) | $\alpha$-BzO-P($EG_{0.21}$-*co*-$EGE_{0.79}$) | 10 | 38 | 21 | 79 |

(continued)

| *Polymer* (Example) | *Sample* | $DP_{EO}$ NMR | $DP_{SCAGE}$ NMR | $mol\%_{EO}$ NMR | $mol\%_{SCAGE}$ NMR |
|---|---|---|---|---|---|
| f (2) | α-MeO-P($EG_{0.93}$-*co*-*i*$PGE_{0.07}$) | 132 | 9 | 93 | 7 |
| g (2) | α-MeO-P($EG_{0.89}$-*co*-*i*$PGE_{0.11}$) | 135 | 16 | 89 | 11 |
| h (2) | α-MeO-P($EG_{0.84}$-*co*-*i*$PGE_{0.16}$) | 119 | 22 | 84 | 16 |
| i (2) | α-MeO-P($EG_{0.80}$-*co*-*i*$PGE_{0.20}$) | 115 | 28 | 80 | 20 |
| j (3) | α-MeO-P($EG_{0.89}$-*co*-*i*$PGE_{0.11}$)-MalFu | 135 | 16 | 89 | 11 |
| k (4) | α-MeO-P($EG_{0.89}$-*co*-*i*$PGE_{0.11}$)-Mal | 135 | 16 | 89 | 11 |

*SCAGE* = Short chain glycidyl ether; *DP* = degree of polymerization

Table 3: Characterization data of polymers prepared

| *Polymer* (Example) | *Sample* | $M_{\eta,NMR}$ [g/mol] | $M_{n,MALDI}$ [g/mol] | $M_{n,SEC}$ [g/mol] | $PDI_{SEC}$ |
|---|---|---|---|---|---|
| a (1) | α-BzO-P($EG_{0.74}$-*co*-$EGE_{0.26}$) | 4400 | 3400 | 2900 | 1.04 |
| b (1) | α-BzO-P($EG_{0.62}$-*co*-$EGE_{0.38}$) | 4600 | 3600 | 2600 | 1.04 |
| c (1) | α-BzO-P($EG_{0.48}$-*co*-$EGE_{0.52}$) | 4300 | 3100 | 2500 | 1.04 |
| d (1) | α-BzO-P($EG_{0.40}$-*co*-$EGE_{0.60}$) | 4500 | 3500 | 2700 | 1.05 |
| e (1) | α-BzO-P($EG_{0.21}$-*co*-$EGE_{0.79}$) | 4500 | 3500 | 2600 | 1.04 |
| f (2) | α-MeO-P($EG_{0.93}$-*co*-*i*$PGE_{0.07}$) | 7300 | 5700 | 5500 | 1.04 |
| g (2) | α-MeO-P($EG_{0.89}$-*co*-*i*$PGE_{0.11}$) | 7800 | 5500 | 5400 | 1.06 |
| h (2) | α-MeO-P($EG_{0.84}$-*co*-*i*$PGE_{0.16}$) | 7900 | 5900 | 5700 | 1.08 |
| i (2) | α-MeO-P($EG_{0.80}$-*co*-*i*$PGE_{0.20}$) | 8400 | 5500 | 5200 | 1.07 |
| j (3) | α-MeO-P ($EG_{0.89}$-*co*-*i*$PGE_{0.11}$)-MalFu | 7600 | 5500 | 5400 | 1.06 |
| k (4) | α-MeO-P($EG_{0.89}$-*co*-*i*$PGE_{0.11}$)-Mal | 7200 | 5500 | 5400 | 1.03 |

$M_n$ = molecular weight (number average molar mass), PDI = dispersity.

Immunogenicity

As can be seen from Table 2, entries g, h and i show copolymers of the present invention which consists of ethylene oxide repeating units and iPGE repeating units with about the same total degree of polymerization. The amount of iPGE repeating units is increasing from g to i from 11% to 20% (see Table 2, entries g, h and i). Figure 6 shows the ELISA test results of polymers g to i and of commercially available mPEG. It shows the function of the normalized absorption at a wavelength of 450 nm versus the log10 function of the polymer concentration in nanograms per ml, therefore illustrating the anti-PEG antibody interaction with the investigated polymer concentrations. Interaction of the polymer with the APA reduces the adsorption. The ELISA data shows that a strong influence of an increasing concentration of alkyl side chains can be observed (it is important to note that the x-axis has a logarithmic scale). With increasing amount of iPGE incorporated into the polyether structure, significantly higher polymer concentrations are necessary to observe interactions between the copolymer and the APA.

Dispersity

As can be seen from Table 3 all polymers of the present invention have a very low dispersity, i.e. 1.10 or lower. For visualization, the SEC traces of these polymers are shown in Figures 2 and 4. It can clearly be seen that the present invention provides polymers with a very narrow molecular weight distribution.

## Claims

1. Polyether polymers represented by the following formula [I]:

$$-(CH_2CHR\text{-}O\text{-})_m\text{-} \qquad [I]$$

wherein

- the residues R are independently from each other selected from the group consisting of hydrogen, ethoxymethyl, n-propoxymethyl and iso-propoxymethyl, with the proviso that the polyether polymers comprise at least two different residues R; and
- m is in the range of from 10 to 1000,

**characterized in that** the polyether polymers are statistical copolymers and **in that** the dispersity is 1.15 or less measured by size exclusion chromatography in DMF by calibration with PEG standards.

2. Polyether polymer according to claim 1, wherein the polyether is selected from the group consisting of poly(ethyl glycidyl ether-co-ethylene oxide) copolymers, poly(n-propyl glycidyl ether-co-ethylene oxide) copolymers and poly(iso-propyl glycidyl ether-co-ethylene oxide) copolymers.

3. Polyether polymer according to any of the preceding claims, wherein 30 to 85% of the residues R are hydrogen and the remaining residues R are independently from each other selected from the group consisting of ethoxymethyl, n-propoxymethyl and iso-propoxymethyl.

4. Polyether polymers according to any of the preceding claims represented by the following formula [II]:

$$X\text{-}(CH_2CHR\text{-}O\text{-})_mCH_2CHR\text{-}Y \qquad [II]$$

wherein X is selected from the group consisting of hydrogen, alkyl, hydroxy, sulfanyl, C1-C10-alkoxy, C1-C10-thioalkoxy, amino, amino-C1-C10-alkoxy, dibenzylamino-C1-C10-alkoxy, amide, N-heterocyclic carbenes and N-heterocyclic olefins;
Y is selected from the group consisting of hydrogen, hydroxy, alkoxy, $-CH_2-C(=O)-R$ wherein R is as defined above, -CHO, alkylcarbonyloxy, alkyoxycarbonyloxy, amine, C1-C10-alkylamine, carboxamido, azide, halogen, sulfanyl, thioalkoxy, N-succinimidyl carbonate and sulfonate;
X and/or Y may also be selected from the group consisting of low molecular weight drugs, nanocarriers, liposomal structures, peptides, polypeptides, proteins, glycoproteins, polynucleotide, polysaccharides, lipid structures, liposomes, aliphatic polyester, preferably poly-(lactic acid), surfaces and interfaces, which are bonded directly by a covalent bond or by a spacer to the polymer
and m is in the range of from 9 to 999.

5. Polyether polymer according to claim 4, wherein X is alkoxy and Y is hydroxy.

6. Polyether polymer according to claim 4, wherein X and Y are each hydroxy.

7. Polyether polymers according to claims 1 to 4 represented by the following formula [II]:

$$X\text{-}(CH_2CHR\text{-}O\text{-})_mCH_2CHR\text{-}Y \qquad [II]$$

wherein X is selected from the group consisting of hydroxyl or -O-X',
wherein X' is selected from the group consisting of

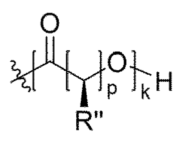 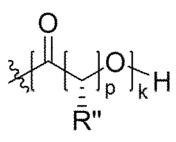 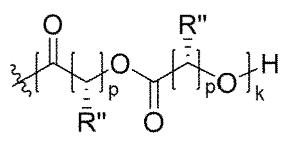

wherein R" = H or alkyl, alkenyl, aryl, alkoxymethyl, alkenyloxymethyl, aryloxymethyl, aminomethyl and thioalkoxymethyl and
p = 1, 2, 3, 4 or 5, and
k = 5-500;

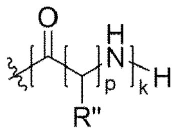 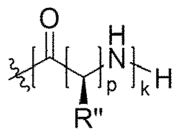 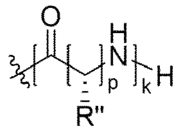

wherein R" = H or alkyl, alkenyl, aryl, alkoxymethyl, alkenyloxymethyl, aryloxymethyl, aminomethyl and thioalkoxymethyl, and
p = 1, 2, 3, 4 or 5 and
k = 5-500; and

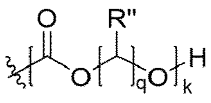

wherein R" = H or alkyl, alkenyl, aryl, alkoxymethyl, alkenyloxymethyl, aryloxymethyl, aminomethyl and thioalkoxymethyl
q = 3, 4 or 5 and
k = 5-500;
and

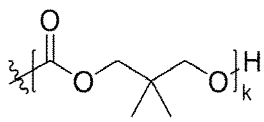

wherein k = 5-500; and
wherein Y is -Z-W, wherein
Z is -O-R'-O- and
W is $-CH_2CHR-(O-CH_2CHR-)_{m'}-V$;
wherein V is X or X';
wherein R' is selected from the group consisting of

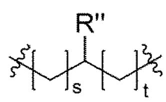

wherein
R" = H or alkyl, alkenyl, aryl, alkoxymethyl, alkenyloxymethyl, aryloxymethyl, aminomethyl and thioalkoxymethyl, and
s = 0-20
t = 0-20; and
further R' is selected from

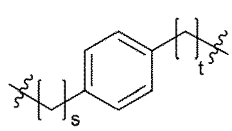
s = 0-20
t = 0-20

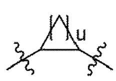
u = 1-10

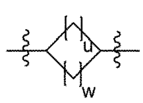
u = 1-10
w = 1-10

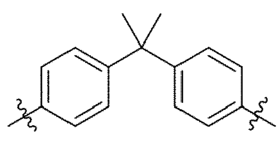

;

and wherein
R is as defined as in any of the preceding claims and
m and m' are independently of each other in the range of from 9 to 999.

**8.** Polyether polymer according to any of claims 4 to 7, wherein end-group fidelity of the polymer in regard to group X and/or in regard to group Y is at least 95%.

**9.** Conjugate, comprising a polyether polymer and a substrate,
wherein the polyether polymer is represented by the following formula [I]:

$$-(CH_2CHR\text{-}O\text{-})_m\text{-} \qquad [I]$$

wherein

- the residues R are independently from each other selected from the group consisting of hydrogen, ethoxymethyl, n-propoxymethyl and iso-propoxymethyl;
- at least one of the residues R is selected from the group consisting of ethoxymethyl, n-propoxymethyl and iso-propoxymethyl; and
- m is in the range of from 10 to 1000,

**characterized in that** the dispersity is 1.15 or less measured by size exclusion chromatography in DMF by calibration with PEG standards.

**10.** Conjugate according to claim 9, wherein the substrate is selected from the groups consisting of low molecular weight drugs, nanocarriers, liposomal structures, peptides, polypeptides, proteins, glycoproteins, polynucleotides, polysaccharides, lipid structures, liposomes, surfaces and interfaces.

**11.** Process for the preparation of a polyether polymer according to any of claims 1 to 10, by anionic ring-opening copolymerization comprising the steps of:

- Providing an anion $An^-$,
- Adding at least one monomer of the formula , where in R is as defined in any of claims 1 to 8,
- Allowing the polymerization to proceed at a temperature in the range of -10 to 90 °C wherein the monomer comprises less than 1 wt % of epichlorohydrin.

**12.** Process according to claim 11, wherein the step of adding at least one monomer and the step of allowing the polymerization to proceed are repeated at least one time, whereby at least one different monomer is used than the first time.

**13.** Process according to any of claims 11 or 12, wherein the counter ion to the $An^-$anion is selected from the group consisting of $Na^+$, $K^+$ and $Cs^+$.

**14.** Use of a polyether polymer for the preparation of a conjugate of the polymer with a bioactive compound,
wherein the polyether polymer is represented by the following formula [I]:

$$-(CH_2CHR\text{-}O\text{-})_m\text{-} \qquad [I]$$

wherein

- the residues R are independently from each other selected from the group consisting of hydrogen, ethoxymethyl, n-propoxymethyl and iso-propoxymethyl;
- at least one of the residues R is selected from the group consisting of ethoxymethyl, n-propoxymethyl and iso-propoxymethyl; and
- m is in the range of from 10 to 1000,

**characterized in that** the dispersity is 1.15 or less measured by size exclusion chromatography in DMF by calibration with PEG standards.

**15.** Use according to claim 14 for the preparation of conjugated lipids for use in vaccines, in particular based on lipid nanoparticles, wherein these nanoparticles are preferably nanoparticles, as used against COVID-19.

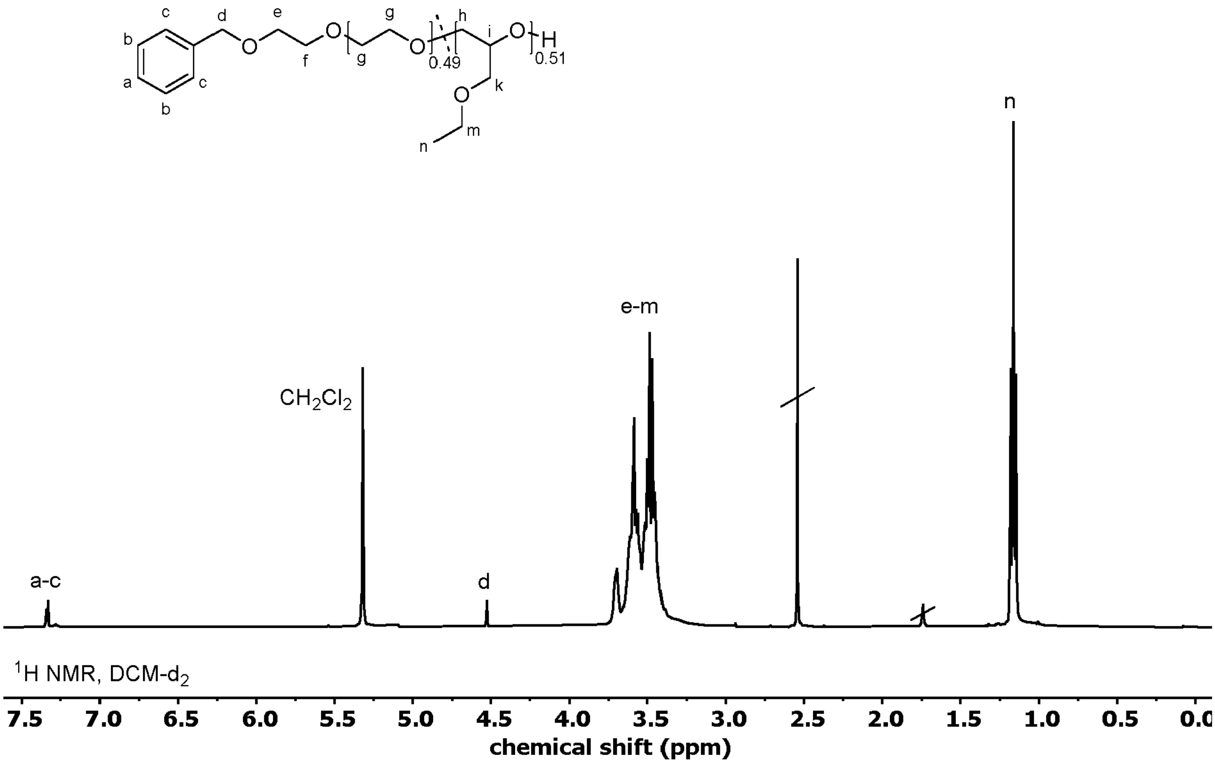


Figure 1

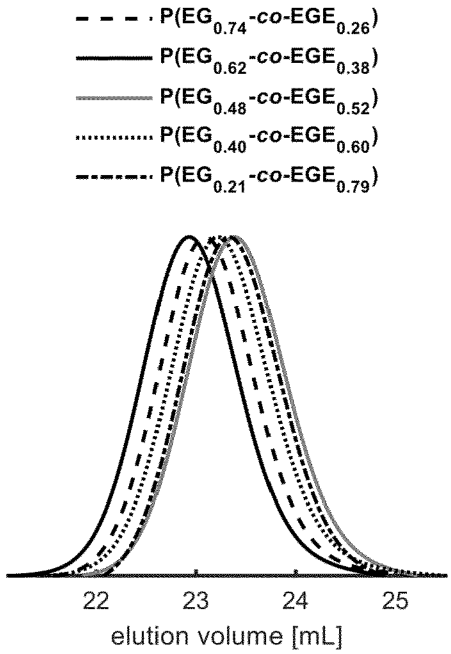


Figure 2

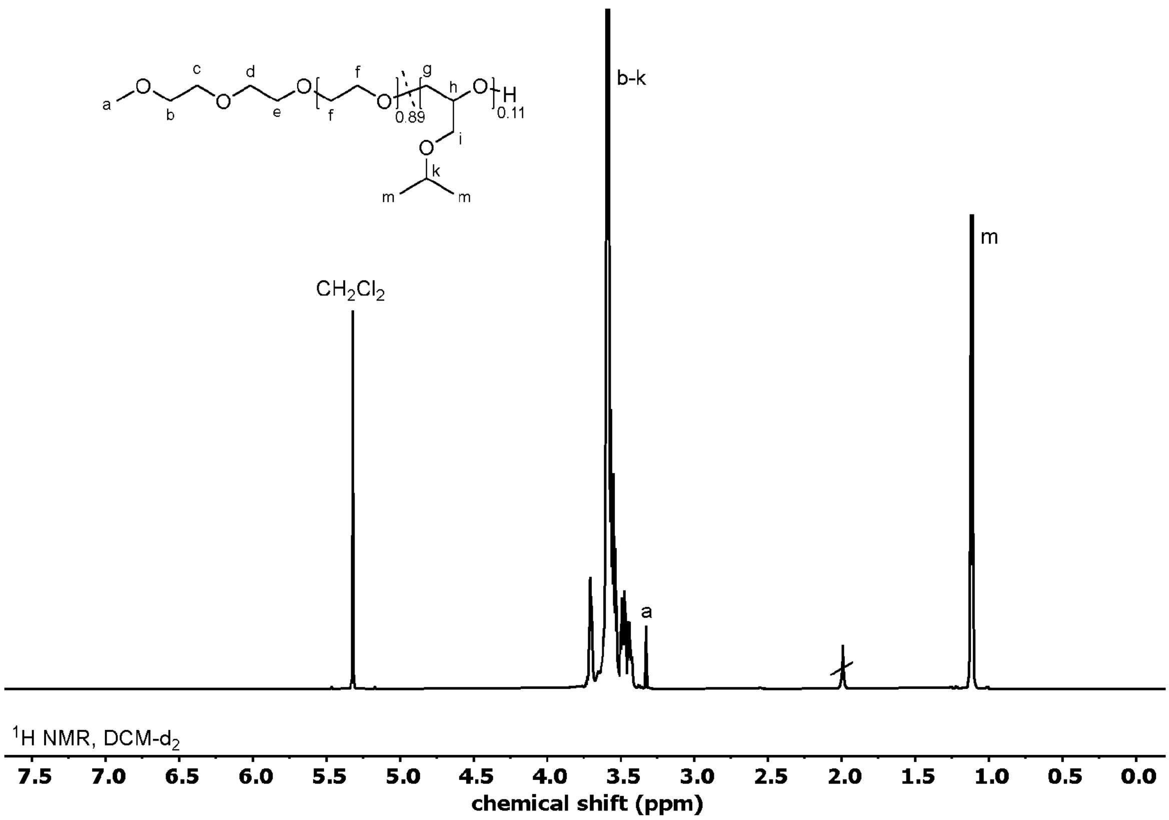


Figure 3

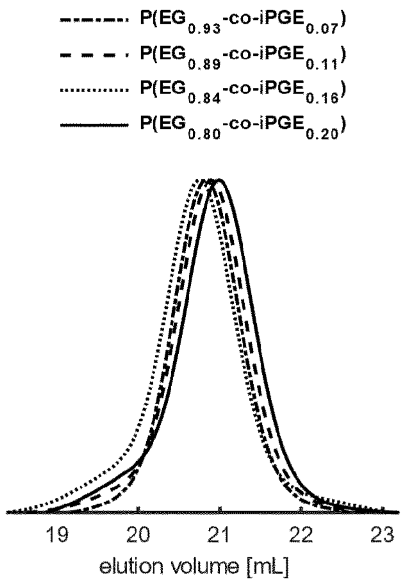


Figure 4

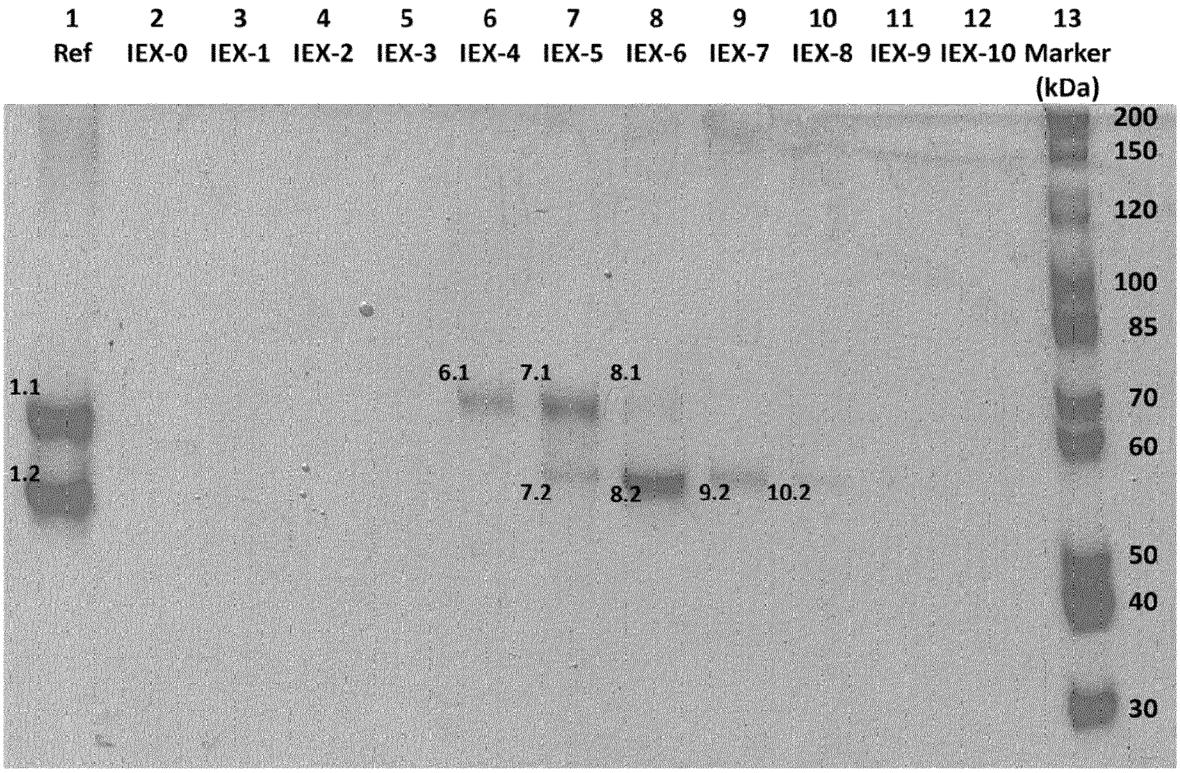


Figure 5

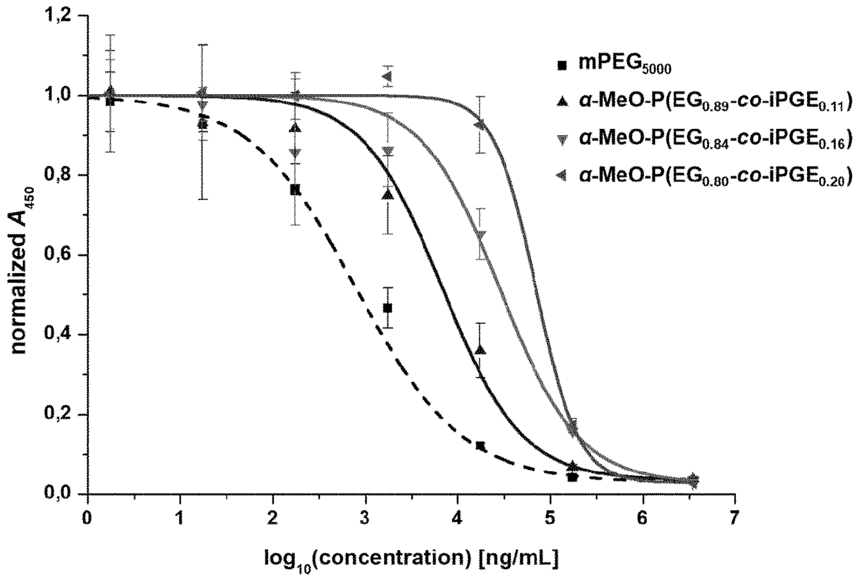


Figure 6

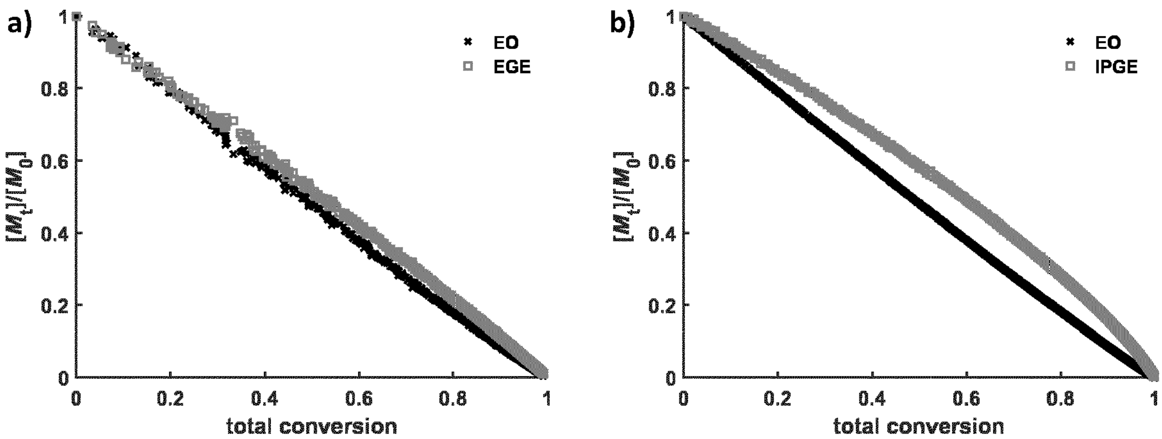
a)
EO
EGE
[M_t]/[M_0]
total conversion
b)
EO
IPGE
[M_t]/[M_0]
total conversion

Figure 7

Europäisches Patentamt
European Patent Office
Office européen des brevets

# EUROPEAN SEARCH REPORT

Application Number
EP 22 20 3748

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X,D | FELLIN C R ET AL: "Tunable temperature and shear-responsive hydrogels based on poly(alkyl glycidyl ether)", POLYMER INTERNATIONAL,, vol. 68, 30 October 2018 (2018-10-30), pages 1238-1246, XP002804686, * Polymers 5-10; page 1238; table 2 * ----- | 1,4,6,8, 11,12 | INV. C08G65/22 A61K47/60 C08G65/333 |
| X,D | JUNG H ET AL: "Regulating dynamics of polyether-based triblock copolymer hydrogels by end block hydrophobicity", MACROMOLECULES,, vol. 53, 20 October 2020 (2020-10-20), pages 10339-10348, XP002804687, * Experimental section; page 10340; table 1 * ----- | 1,4,6,8, 11 | |
| E | EP 4 089 133 A1 (UNIV MAINZ JOHANNES GUTENBERG [DE]) 16 November 2022 (2022-11-16) * claims 1,4-15 * * example 5 * * Example k; tables 2,3 * ----- | 1,2,4-15 | TECHNICAL FIELDS SEARCHED (IPC) |
| A | JP H03 163442 A (KONISHIROKU PHOTO IND) 15 July 1991 (1991-07-15) * polymers 1-1,1-7, and 1-8; page 3 * ----- | 1-15 | C08G A61K |

The present search report has been drawn up for all claims

1

| Place of search | Date of completion of the search | Examiner |
|---|---|---|
| The Hague | 25 April 2023 | O'Sullivan, Timothy |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
.................................................................
& : member of the same patent family, corresponding document

EPO FORM 1503 03.82 (P04C01)

## ANNEX TO THE EUROPEAN SEARCH REPORT ON EUROPEAN PATENT APPLICATION NO. EP 22 20 3748

This annex lists the patent family members relating to the patent documents cited in the above-mentioned European search report. The members are as contained in the European Patent Office EDP file on
The European Patent Office is in no way liable for these particulars which are merely given for the purpose of information.

25-04-2023

| Patent document cited in search report | | Publication date | Patent family member(s) | | Publication date |
|---|---|---|---|---|---|
| EP 4089133 | A1 | 16-11-2022 | EP | 4089133 A1 | 16-11-2022 |
| | | | WO | 2022238532 A1 | 17-11-2022 |
| JP H03163442 | A | 15-07-1991 | NONE | | |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 8129330 B2
- US 20190015520 A1


### Non-patent literature cited in the description


- **YAROVSKY et al.** Quantitative design rules for protein-resistant surface coatings using machine learning. *Scientific Rep.,* 2019, vol. 9, 265
- **LAI et al.** Structure of an anti-PEG antibody reveals an open ring that captures highly flexible PEG polymers. *Commun Chem,* 2020, vol. 3, 124
- **SHERMAN et al.** Role of the methoxy group in immune responses to mPEG-protein conjugates. *Bioconjug Chem,* 2012, vol. 23 (3), 485-499
- **SHERMAN et al.** Selectivity of binding of PEGs and PEG-like oligomers to anti-PEG antibodies induced by methoxyPEG-proteins. *Mol Immunol,* 2014, vol. 57 (2), 236-246
- **LIU et al.** Antibodies Predict Pegasparagase Allergic Reactions and Failure of Rechallenge. *J. Clin. Oncol.,* 2019, vol. 37, 2051
- **ABU LILA et al.** Use of polyglycerol (PG), instead of polyethylene glycol (PEG), prevents induction of the accelerated blood clearance phenomenon against long-circulating liposomes upon repeated administration. *International Journal of Pharmaceutics,* 2013, vol. 456, 235-242
- **C. R. FELLIN et al.** tunable temperature- and shear-responsiove hydrogels based on poly(alkyl glycidyl ether)s. *Polym Int,* 2019, vol. 68, 1238-1246
- **H. JUNG.** Regulating Dynamics of Polyether-Based Triblock Copolymer Hydrogels by End-Block Hydrophobicity. *Macromolecules,* 2020, vol. 53, 10339-10348